(19) Europäisches Patentamt / European Patent Office / Office européen des brevets

(11) **EP 4 412 139 A1**

(12) **EUROPEAN PATENT APPLICATION**
published in accordance with Art. 153(4) EPC

(43) Date of publication:
**07.08.2024 Bulletin 2024/32**

(21) Application number: **22885364.4**

(22) Date of filing: **22.08.2022**

(51) International Patent Classification (IPC):
**H04L 5/00** (2006.01) **H04W 68/00** (2009.01)
**H04W 52/02** (2009.01)

(52) Cooperative Patent Classification (CPC):
**H04L 5/00; H04W 52/02; H04W 68/00**

(86) International application number:
**PCT/CN2022/114010**

(87) International publication number:
**WO 2023/071465 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.10.2021 CN 202111259695
05.11.2021 CN 202111308894
16.04.2022 CN 202210400437

(71) Applicant: **Huawei Technologies Co., Ltd.**
**Shenzhen, Guangdong 518129 (CN)**

(72) Inventors:
• **XUE, Yifan**
**Shenzhen, Guangdong 518129 (CN)**
• **XUE, Lixia**
**Shenzhen, Guangdong 518129 (CN)**
• **ZHANG, Zhanzhan**
**Shenzhen, Guangdong 518129 (CN)**
• **TIE, Xiaolei**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND APPARATUS**

(57) Embodiments of this application relate to the field of communication technologies, and provide a communication method and apparatus to indicate, by using limited bits in paging DCI or PEI, a plurality of reference signal resource sets or SSBs corresponding to a plurality of reference signals. The method includes: A terminal device receives, from a network device, first DCI that includes reference signal availability indication information, and determines, based on the first DCI, whether a reference signal is sent. The reference signal availability indication information includes one or more indication bits. Each indication bit is associated with one or more reference signal resource sets, or associated with one or more SSBs. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on QCL configuration information included in configuration information of the reference signal resource set, and the QCL configuration information is used to configure an SSB associated with the reference signal resource set.

FIG. 5

**Description**

This application claims priority to Chinese Patent Application No. 202111259695.1, filed with the China National Intellectual Property Administration on October 28, 2021 and entitled "METHOD FOR SENDING TRS FOR IDLE/INACTIVE UE", claims priority to Chinese Patent Application No. 202111308894.7, filed with the China National Intellectual Property Administration on November 05, 2021 and entitled "COMMUNICATION METHOD AND APPARATUS", and claims priority to Chinese Patent Application No. 202210400437.9, filed with the China National Intellectual Property Administration on April 16, 2022 and entitled "COMMUNICATION METHOD AND APPARATUS", all of which are incorporated herein by reference in their entireties.

**TECHNICAL FIELD**

This application relates to the field of communication technologies, and in particular, to a communication method and apparatus.

**BACKGROUND**

In a communication system, a network device may send configuration information of a reference signal in system information to a terminal device, and the terminal device may perform automatic gain control adjustment, time-frequency synchronization, and other processing based on the reference signal.

To avoid increasing a burden on the network device, it is not guaranteed that reference signals are always sent, and dynamic signaling may indicate whether the reference signals are sent. The dynamic signaling may be signaling such as paging downlink control information (paging downlink control information, Paging DCI) or a paging early indication (paging early indication, PEI).

To determine a sending direction of the reference signal, a synchronization signal and physical broadcast channel block (synchronization signal and PBCH block, SSB) associated with each reference signal resource set may be configured for the reference signal resource set. Because the network device may send SSBs in a maximum of 64 different directions, if it is expected that each SSB direction has a corresponding reference signal, 64 reference signal resource sets may need to be configured, or reference signals associated with up to 64 SSB indexes need to be configured.

However, a quantity of available bits in the paging DCI or the PEI is limited. How to use the limited bits to indicate a plurality of reference signal resource sets, or how to use the limited bits to indicate SSBs corresponding to the plurality of reference signals becomes a technical problem to be urgently resolved.

**SUMMARY**

In view of this, this application provides a communication method and apparatus to indicate, by using limited bits in paging DCI or PEI, a plurality of reference signal resource sets or SSBs corresponding to a plurality of reference signals.

According to a first aspect, an embodiment of this application provides a communication method. The method may include: A terminal device receives first downlink control information DCI from a network device, and determines, based on the first DCI, whether a reference signal is sent. The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

According to the first aspect, the terminal device may receive, from the network device, the first DCI that includes the reference signal availability indication information. Because each indication bit in the reference signal availability indication information may be associated with the one or more reference signal resource sets, or associated with the one or more SSBs, the terminal device may determine, based on the value of each indication bit, whether the reference signal corresponding to the reference signal resource set associated with each indication bit is sent, or whether the reference signal corresponding to the SSB associated with each indication bit is sent. A mapping relationship between the indication bit, and the reference signal resource set or SSB is clearly defined in embodiments of this application. This provides a feasible solution for the network device to indicate the plurality of reference signal resource sets or the plurality of SSBs by using limited indication bits, to notify the terminal device whether corresponding reference signals are sent.

In a possible design, system information received by the terminal device includes first configuration information. The first configuration information is used to configure a location of the indication bit that is associated with the SSB and that is in the first DCI.

Based on this possible design, the terminal device may determine, based on the first configuration information, the location of the indication bit that is associated with the SSB and that is in the first DCI, and determine, based on the value of the indication bit, whether the reference signal corresponding to the SSB is sent.

In a possible design, a quantity of bits included in the reference signal availability indication information is F, and F is determined based on the first configuration information corresponding to each SSB.

Based on this possible design, the quantity of bits included in the reference signal availability indication information may be determined based on the first configuration information corresponding to each SSB. This provides a feasible solution for determining the quantity of bits included in the reference signal availability indication information.

In a possible design, system information received by the terminal device includes second configuration information. The second configuration information is used to configure the one or more reference signal resource sets associated with the indication bit, or the second configuration information is used to configure the one or more SSBs associated with the indication bit.

Based on this possible design, the terminal device may determine, based on the second configuration information, the one or more reference signal resource sets associated with the indication bit, and determine, based on the value of the indication bit, whether the reference signal corresponding to the reference signal resource set associated with the indication bit is sent.

In a possible design, a quantity of bits included in the reference signal availability indication information is G, and G is determined based on a quantity of pieces of second configuration information included in the system information.

Based on this possible design, the quantity of bits included in the reference signal availability indication information may be determined based on the quantity of pieces of second configuration information. This provides a feasible solution for determining the quantity of bits included in the reference signal availability indication information.

In a possible design, system information received by the terminal device includes third configuration information. The third configuration information is used to configure a quantity of reference signal resource sets associated with each indication bit, or the third configuration information is used to configure a quantity of SSBs associated with each indication bit.

Based on this possible design, the terminal device may determine, based on the third configuration information, the quantity of reference signal resource sets or SSBs associated with each indication bit, determine, based on the quantity of reference signal resource sets or SSBs associated with each indication bit, the reference signal resource set or SSB associated with each indication bit, and determine, based on the value of the indication bit, whether the reference signal corresponding to the reference signal resource set associated with the indication bit is sent.

In a possible design, the configuration information of the reference signal resource set includes fourth configuration information. The fourth configuration information is used to configure a location of the indication bit that is associated with the reference signal resource set and that is in the first DCI.

Based on this possible design, the terminal device may determine, based on the fourth configuration information, the location of the indication bit that is associated with the reference signal resource set and that is in the first DCI, and determine, based on the value of the indication bit, whether the reference signal corresponding to the reference signal resource set associated with the indication bit is sent.

In a possible design, a quantity of bits included in the reference signal availability indication information is E, and E is determined based on the fourth configuration information included in each reference signal resource set.

Based on this possible design, the quantity of bits included in the reference signal availability indication information may be determined based on the fourth configuration information included in each reference signal resource set. This provides a feasible solution for determining the quantity of bits included in the reference signal availability indication information.

In a possible design, the reference signal availability indication information includes a maximum of N bits, and N is a positive integer. A quantity of reference signal resource sets associated with the first DCI is M, or a quantity of SSBs associated with the first DCI is M, and M is a positive integer. When N is greater than or equal to M, a quantity of bits in the one or more indication bits is M; and each indication bit one-to-one corresponds to one reference signal resource set, or each indication bit one-to-one corresponds to one SSB.

Based on this possible design, when N is greater than or equal to M, the indication bits may one-to-one correspond to the reference signal resource sets or SSBs. This provides a feasible solution for configuring an association relationship between the indication bit, and the reference signal resource set or SSB.

In a possible design, when N is less than M, a quantity of bits in the one or more indication bits is N, there are Q indication bits in the N indication bits, each of the Q indication bits is associated with A reference signal resource sets or A SSBs, and each of remaining (N-Q) indication bits in the N indication bits is associated with B reference signal resource sets or B SSBs. Q is a remainder of dividing M by N, A is a round-up result of dividing M by N, and B is a round-down result of dividing M by N.

In a possible design, the Q indication bits are first Q indication bits in the N indication bits, or last Q indication bits in the N indication bits.

Based on the foregoing two possible designs, when N is less than M, an association relationship between the indication bit, and the reference signal resource set or SSB may be configured in the foregoing manner. This provides a feasible solution for configuring the association relationship between the indication bit, and the reference signal resource set or SSB.

In a possible design, when N is less than M, a quantity of bits in the one or more indication bits is N, and each of P indication bits in the N indication bits is associated with A reference signal resource sets or A SSBs. (P*A) is less than or equal to M, ((P+1)*A) is greater than M, and A is a round-up result of dividing M by N.

In a possible design, when (P*A) is less than M, a $(P+1)^{th}$ bit in the N indication bits is associated with (M-P*A) reference signal resource sets or (M-P*A) SSBs.

In a possible design, the P indication bits are first P indication bits in the N indication bits, or the P indication bits are last P indication bits in the N indication bits.

Based on the foregoing three possible designs, when N is less than M, an association relationship between the indication bit, and the reference signal resource set or SSB may be configured in the foregoing manner. This provides a feasible solution for configuring the association relationship between the indication bit, and the reference signal resource set or SSB.

In a possible design, reference signal resource set indexes or SSB indexes associated with each indication bit in the first DCI are in ascending or descending order; or in the reference signal resource set indexes or SSB indexes associated with each indication bit in the first DCI, an index interval between neighboring reference signal resource sets or an index interval between neighboring SSBs is equal to a quantity of bits of the reference signal availability indication information.

Based on this possible design, when each indication bit corresponds to the one or more reference signal resource sets or SSBs, the reference signal resource set or SSB specifically associated with each indication bit may be determined in the foregoing two manners.

In a possible design, the quantity of SSBs associated with the first DCI is equal to a quantity of predefined SSBs, and the quantity of predefined SSBs is determined based on a frequency band on which the SSB is located and a subcarrier spacing; the quantity of SSBs associated with the first DCI is equal to a quantity of SSBs actually sent by the network device, and the quantity of SSBs actually sent by the network device is determined based on ssb-PositionsInBurst included in SIB1 sent by the network device; or the quantity of SSBs associated with the first DCI is equal to a quantity of SSBs that is configured in the system information and that is associated with the reference signal, and the quantity of SSBs that is configured in the system information and that is associated with the reference signal is determined based on the QCL configuration information included in the configuration information of each reference signal resource set.

Based on this possible design, a plurality of feasible solutions are provided for determining the quantity of SSBs associated with the first DCI.

In a possible design, the quantity of reference signal resource sets associated with the first DCI is equal to a quantity of reference signal resource sets configured in the system information.

Based on this possible design, one feasible solution is provided for determining the quantity of reference signal resource sets associated with the first DCI.

In a possible design, the first DCI is paging paging DCI or a paging early indication PEI.

In a possible design, when the first DCI is the paging paging DCI, the terminal device further receives second DCI from the network device, where the second DCI is the paging early indication PEI. The second DCI includes a first indication bit, the first indication bit is associated with one or more SSBs, and the first indication bit indicates whether a reference signal corresponding to the SSB associated with the first indication bit is sent. The one or more SSBs associated with the first indication bit are exactly the same as the one or more SSBs associated with 1 indication bit included in the first DCI, and the one or more SSBs associated with the first indication bit include an SSB quasi-co-located with the second DCI.

Based on the foregoing two possible designs, when the first DCI is the paging paging DCI, the terminal device further receives the second DCI from the network device, and the terminal device may alternatively determine, based on the second DCI, whether the reference signal is sent.

According to a second aspect, an embodiment of this application provides a communication apparatus. The communication apparatus may implement functions performed by the terminal device according to the first aspect or the possible designs of the first aspect, and the functions may be implemented by hardware executing corresponding software. The hardware or the software includes one or more modules corresponding to the functions, for example, a transceiver module and a processing module. The transceiver module may be configured to receive first downlink control information DCI from a network device. The processing module may be configured to determine, based on the first DCI, whether a reference signal is sent. The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

In a possible design, system information received by the transceiver module includes first configuration information. The first configuration information is used to configure a location of the indication bit that is associated with the SSB and that is in the first DCI.

In a possible design, a quantity of bits included in the reference signal availability indication information is F, and F is determined based on the first configuration information corresponding to each SSB.

In a possible design, system information received by the transceiver module includes second configuration information. The second configuration information is used to configure the one or more reference signal resource sets associated with the indication bit, or the second configuration information is used to configure the one or more SSBs associated with the indication bit.

In a possible design, a quantity of bits included in the reference signal availability indication information is G, and G is determined based on a quantity of pieces of second configuration information included in the system information.

In a possible design, system information received by the transceiver module includes third configuration information. The third configuration information is used to configure a quantity of reference signal resource sets associated with each indication bit, or the third configuration information is used to configure a quantity of SSBs associated with each indication bit.

In a possible design, the configuration information of the reference signal resource set includes fourth configuration information. The fourth configuration information is used to configure a location of the indication bit that is associated with the reference signal resource set and that is in the first DCI.

In a possible design, a quantity of bits included in the reference signal availability indication information is E, and E is determined based on the fourth configuration information included in each reference signal resource set.

In a possible design, the reference signal availability indication information includes a maximum of N bits, and N is a positive integer. A quantity of reference signal resource sets associated with the first DCI is M, or a quantity of SSBs associated with the first DCI is M, and M is a positive integer. When N is greater than or equal to M, a quantity of bits in the one or more indication bits is M; and each indication bit one-to-one corresponds to one reference signal resource set, or each indication bit one-to-one corresponds to one SSB.

In a possible design, when N is less than M, a quantity of bits in the one or more indication bits is N, there are Q indication bits in the N indication bits, each of the Q indication bits is associated with A reference signal resource sets or A SSBs, and each of remaining (N-Q) indication bits in the N indication bits is associated with B reference signal resource sets or B SSBs. Q is a remainder of dividing M by N, A is a round-up result of dividing M by N, and B is a round-down result of dividing M by N.

In a possible design, the Q indication bits are first Q indication bits in the N indication bits, or last Q indication bits in the N indication bits.

In a possible design, when N is less than M, a quantity of bits in the one or more indication bits is N, and each of P indication bits in the N indication bits is associated with A reference signal resource sets or A SSBs. (P*A) is less than or equal to M, ((P+1)*A) is greater than M, and A is a round-up result of dividing M by N.

In a possible design, when (P*A) is less than M, a $(P+1)^{th}$ bit in the N indication bits is associated with (M-P*A) reference signal resource sets or (M-P*A) SSBs.

In a possible design, the P indication bits are first P indication bits in the N indication bits, or the P indication bits are last P indication bits in the N indication bits.

In a possible design, reference signal resource set indexes or SSB indexes associated with each indication bit in the first DCI are in ascending or descending order; or in the reference signal resource set indexes or SSB indexes associated with each indication bit in the first DCI, an index interval between neighboring reference signal resource sets or an index interval between neighboring SSBs is equal to a quantity of bits of the reference signal availability indication information.

In a possible design, the quantity of SSBs associated with the first DCI is equal to a quantity of predefined SSBs, and the quantity of predefined SSBs is determined based on a frequency band on which the SSB is located and a subcarrier spacing; the quantity of SSBs associated with the first DCI is equal to a quantity of SSBs actually sent by the network device, and the quantity of SSBs actually sent by the network device is determined based on ssb-PositionsInBurst included in SIB1 sent by the network device; or the quantity of SSBs associated with the first DCI is equal to a quantity of SSBs that is configured in the system information and that is associated with the reference signal, and the quantity of SSBs that is configured in the system information and that is associated with the reference signal is determined based on the QCL configuration information included in the configuration information of each reference signal resource set.

In a possible design, the quantity of reference signal resource sets associated with the first DCI is equal to a quantity of reference signal resource sets configured in the system information.

In a possible design, the first DCI is paging paging DCI or a paging early indication PEI.

In a possible design, when the first DCI is the paging paging DCI, the transceiver module further receives second DCI from the network device, where the second DCI is the paging early indication PEI. The second DCI includes a first indication bit, the first indication bit is associated with one or more SSBs, and the first indication bit indicates whether a reference signal corresponding to the SSB associated with the first indication bit is sent. The one or more SSBs associated with the first indication bit are exactly the same as the one or more SSBs associated with 1 indication bit included in the first DCI, and the one or more SSBs associated with the first indication bit include an SSB quasi-co-located with the second DCI.

It should be noted that for a specific implementation of the communication apparatus according to the second aspect, refer to behavior functions of the terminal device in the communication method according to any one of the first aspect or the possible designs of the first aspect.

According to a third aspect, an embodiment of this application provides a communication apparatus. The communication apparatus may be a terminal device, or a chip or a system-on-a-chip in the terminal device. The communication apparatus may implement functions performed by the terminal device according to the foregoing aspects or the possible designs, and the functions may be implemented by hardware. In a possible design, the communication apparatus may include a transceiver and a processor. The transceiver and the processor may be configured to support the communication apparatus to implement the functions according to any one of the first aspect or the possible designs of the first aspect. For example, the transceiver may be configured to receive first downlink control information DCI from a network device. The processor may be configured to determine, based on the first DCI, whether a reference signal is sent. The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory. The communication apparatus is enabled to perform the communication method according to any one of the first aspect or the possible designs of the first aspect.

For a specific implementation of the communication apparatus according to the third aspect, refer to behavior functions of the terminal device in the communication method according to any one of the first aspect or the possible designs of the first aspect.

According to a fourth aspect, an embodiment of this application provides a communication method. The method may include: A network device determines first downlink control information DCI, and sends the first DCI to a terminal device. The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

According to the fourth aspect, the network device may send, to the terminal device, the first DCI that includes the reference signal availability indication information. Because each indication bit in the reference signal availability indication information may be associated with the one or more reference signal resource sets, or associated with the one or more SSBs, the terminal device may determine, based on the value of each indication bit, whether the reference signal corresponding to the reference signal resource set associated with each indication bit is sent, or whether the reference signal corresponding to the SSB associated with each indication bit is sent. A mapping relationship between the indication bit, and the reference signal resource set or SSB is clearly defined in embodiments of this application. This provides a feasible solution for the network device to indicate the plurality of reference signal resource sets or the plurality of SSBs by using limited indication bits, to notify the terminal device whether corresponding reference signals are sent.

In a possible design, system information sent by the network device includes first configuration information. The first configuration information is used to configure a location of the indication bit that is associated with the SSB and that is in the first DCI.

Based on this possible design, the network device may indicate, based on the first configuration information, the location of the indication bit that is associated with the SSB and that is in the first DCI. The terminal device may determine, based on the first configuration information, the location of the indication bit that is associated with the SSB and that is in the first DCI, and determine, based on the value of the indication bit, whether the reference signal corresponding to the SSB is sent.

In a possible design, a quantity of bits included in the reference signal availability indication information is F, and F is determined based on the first configuration information corresponding to each SSB.

Based on this possible design, the quantity of bits included in the reference signal availability indication information may be determined based on the first configuration information corresponding to each SSB. This provides a feasible solution for determining the quantity of bits included in the reference signal availability indication information.

In a possible design, system information sent by the network device includes second configuration information. The second configuration information is used to configure the one or more reference signal resource sets associated with the indication bit, or the second configuration information is used to configure the one or more SSBs associated with the indication bit.

Based on this possible design, the network device sends the second configuration information to the terminal device, so that the terminal device may determine, based on the second configuration information, the one or more reference signal resource sets associated with the indication bit, and determine, based on the value of the indication bit, whether the reference signal corresponding to the reference signal resource set associated with the indication bit is sent.

In a possible design, a quantity of bits included in the reference signal availability indication information is G, and G is determined based on a quantity of pieces of second configuration information included in the system information.

Based on this possible design, the quantity of bits included in the reference signal availability indication information may be determined based on the quantity of pieces of second configuration information. This provides a feasible solution for determining the quantity of bits included in the reference signal availability indication information.

In a possible design, system information sent by the network device includes third configuration information. The third configuration information is used to configure a quantity of reference signal resource sets associated with each indication bit, or the third configuration information is used to configure a quantity of SSBs associated with each indication bit.

Based on this possible design, the network device sends the third configuration information to the terminal device, so that the terminal device may determine, based on the third configuration information, the quantity of reference signal resource sets or SSBs associated with each indication bit, determine, based on the quantity of reference signal resource sets or SSBs associated with each indication bit, the reference signal resource set or SSB associated with each indication bit, and determine, based on the value of the indication bit, whether the reference signal corresponding to the reference signal resource set associated with the indication bit is sent.

In a possible design, the configuration information of the reference signal resource set includes fourth configuration information. The fourth configuration information is used to configure a location of the indication bit that is associated with the reference signal resource set and that is in the first DCI.

Based on this possible design, the network device sends the fourth configuration information to the terminal device, so that the terminal device may determine, based on the fourth configuration information, the location of the indication bit that is associated with the reference signal resource set and that is in the first DCI, and determine, based on the value of the indication bit, whether the reference signal corresponding to the reference signal resource set associated with the indication bit is sent.

In a possible design, a quantity of bits included in the reference signal availability indication information is E, and E is determined based on the fourth configuration information included in each reference signal resource set.

Based on this possible design, the quantity of bits included in the reference signal availability indication information may be determined based on the fourth configuration information included in each reference signal resource set. This provides a feasible solution for determining the quantity of bits included in the reference signal availability indication information.

In a possible design, the reference signal availability indication information includes a maximum of N bits, and N is a positive integer. A quantity of reference signal resource sets associated with the first DCI is M, or a quantity of SSBs associated with the first DCI is M, and M is a positive integer. When N is greater than or equal to M, a quantity of bits in the one or more indication bits is M; and each indication bit one-to-one corresponds to one reference signal resource set, or each indication bit one-to-one corresponds to one SSB.

Based on this possible design, when N is greater than or equal to M, the indication bits may one-to-one correspond to the reference signal resource sets or SSBs. This provides a feasible solution for configuring an association relationship between the indication bit, and the reference signal resource set or SSB.

In a possible design, when N is less than M, a quantity of bits in the one or more indication bits is N, there are Q indication bits in the N indication bits, each of the Q indication bits is associated with A reference signal resource sets or A SSBs, and each of remaining (N-Q) indication bits in the N indication bits is associated with B reference signal resource sets or B SSBs. Q is a remainder of dividing M by N, A is a round-up result of dividing M by N, and B is a round-down result of dividing M by N.

In a possible design, the Q indication bits are first Q indication bits in the N indication bits, or last Q indication bits in the N indication bits.

Based on the foregoing two possible designs, when N is less than M, an association relationship between the indication bit, and the reference signal resource set or SSB may be configured in the foregoing manner. This provides a feasible solution for configuring the association relationship between the indication bit, and the reference signal resource set or SSB.

In a possible design, when N is less than M, a quantity of bits in the one or more indication bits is N, and each of P indication bits in the N indication bits is associated with A reference signal resource sets or A SSBs. (P*A) is less than or equal to M, ((P+1)*A) is greater than M, and A is a round-up result of dividing M by N.

In a possible design, when (P*A) is less than M, a (P+1)th bit in the N indication bits is associated with (M-P*A) reference signal resource sets or (M-P*A) SSBs.

In a possible design, the P indication bits are first P indication bits in the N indication bits, or the P indication bits are last P indication bits in the N indication bits.

Based on the foregoing three possible designs, when N is less than M, an association relationship between the indication bit, and the reference signal resource set or SSB may be configured in the foregoing manner. This provides a feasible solution for configuring the association relationship between the indication bit, and the reference signal resource set or SSB.

In a possible design, reference signal resource set indexes or SSB indexes associated with each indication bit in the first DCI are in ascending or descending order; or in the reference signal resource set indexes or SSB indexes associated with each indication bit in the first DCI, an index interval between neighboring reference signal resource sets or an index interval between neighboring SSBs is equal to a quantity of bits of the reference signal availability indication information.

Based on this possible design, when each indication bit corresponds to the one or more reference signal resource sets or SSBs, the reference signal resource set or SSB specifically associated with each indication bit may be determined in the foregoing two manners.

In a possible design, the quantity of SSBs associated with the first DCI is equal to a quantity of predefined SSBs, and the quantity of predefined SSBs is determined based on a frequency band on which the SSB is located and a subcarrier spacing; the quantity of SSBs associated with the first DCI is equal to a quantity of SSBs actually sent by the network device, and the quantity of SSBs actually sent by the network device is determined based on ssb-PositionsInBurst included in SIB1 sent by the network device; or the quantity of SSBs associated with the first DCI is equal to a quantity of SSBs that is configured in the system information and that is associated with the reference signal, and the quantity of SSBs that is configured in the system information and that is associated with the reference signal is determined based on the QCL configuration information included in the configuration information of each reference signal resource set.

Based on this possible design, a plurality of feasible solutions are provided for determining the quantity of SSBs associated with the first DCI.

In a possible design, the quantity of reference signal resource sets associated with the first DCI is equal to a quantity of reference signal resource sets configured in the system information.

Based on this possible design, one feasible solution is provided for determining the quantity of reference signal resource sets associated with the first DCI.

In a possible design, the first DCI is paging paging DCI or a paging early indication PEI.

In a possible design, when the first DCI is the paging paging DCI, the network device further sends second DCI to the terminal device, where the second DCI is the paging early indication PEI. The second DCI includes a first indication bit, the first indication bit is associated with one or more SSBs, and the first indication bit indicates whether a reference signal corresponding to the SSB associated with the first indication bit is sent. The one or more SSBs associated with the first indication bit are exactly the same as the one or more SSBs associated with 1 indication bit included in the first DCI, and the one or more SSBs associated with the first indication bit include an SSB quasi-co-located with the second DCI.

Based on the foregoing two possible designs, when the first DCI is the paging paging DCI, the terminal device further receives the second DCI from the network device, and the terminal device may alternatively determine, based on the second DCI, whether the reference signal is sent.

According to a fifth aspect, an embodiment of this application provides a communication apparatus. The communication apparatus may implement functions performed by the network node according to the fourth aspect or the possible designs of the fourth aspect, and the functions may be implemented by hardware executing corresponding software. The hardware or the software includes one or more modules corresponding to the functions, for example, a processing module and a transceiver module. The processing module may be configured to determine first downlink control information DCI. The transceiver module may be configured to send the first DCI to a terminal device. The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

In a possible design, system information sent by the transceiver module includes first configuration information. The first configuration information is used to configure a location of the indication bit that is associated with the SSB and that is in the first DCI.

In a possible design, a quantity of bits included in the reference signal availability indication information is F, and F is determined based on the first configuration information corresponding to each SSB.

In a possible design, system information sent by the transceiver module includes second configuration information. The second configuration information is used to configure the one or more reference signal resource sets associated with the indication bit, or the second configuration information is used to configure the one or more SSBs associated with the indication bit.

In a possible design, a quantity of bits included in the reference signal availability indication information is G, and G is determined based on a quantity of pieces of second configuration information included in the system information.

In a possible design, system information sent by the transceiver module includes third configuration information. The third configuration information is used to configure a quantity of reference signal resource sets associated with each indication bit, or the third configuration information is used to configure a quantity of SSBs associated with each indication bit.

In a possible design, the configuration information of the reference signal resource set includes fourth configuration information. The fourth configuration information is used to configure a location of the indication bit that is associated with the reference signal resource set and that is in the first DCI.

In a possible design, a quantity of bits included in the reference signal availability indication information is E, and E is determined based on the fourth configuration information included in each reference signal resource set.

In a possible design, the reference signal availability indication information includes a maximum of N bits, and N is a positive integer. A quantity of reference signal resource sets associated with the first DCI is M, or a quantity of SSBs associated with the first DCI is M, and M is a positive integer. When N is greater than or equal to M, a quantity of bits in the one or more indication bits is M; and each indication bit one-to-one corresponds to one reference signal resource set, or each indication bit one-to-one corresponds to one SSB.

In a possible design, when N is less than M, a quantity of bits in the one or more indication bits is N, there are Q indication bits in the N indication bits, each of the Q indication bits is associated with A reference signal resource sets or A SSBs, and each of remaining (N-Q) indication bits in the N indication bits is associated with B reference signal resource sets or B SSBs. Q is a remainder of dividing M by N, A is a round-up result of dividing M by N, and B is a round-down result of dividing M by N.

In a possible design, the Q indication bits are first Q indication bits in the N indication bits, or last Q indication bits in the N indication bits.

In a possible design, when N is less than M, a quantity of bits in the one or more indication bits is N, and each of P indication bits in the N indication bits is associated with A reference signal resource sets or A SSBs. (P*A) is less than or equal to M, ((P+1)*A) is greater than M, and A is a round-up result of dividing M by N.

In a possible design, when (P*A) is less than M, a $(P+1)^{th}$ bit in the N indication bits is associated with (M-P*A) reference signal resource sets or (M-P*A) SSBs.

In a possible design, the P indication bits are first P indication bits in the N indication bits, or the P indication bits are last P indication bits in the N indication bits.

In a possible design, reference signal resource set indexes or SSB indexes associated with each indication bit in the first DCI are in ascending or descending order; or in the reference signal resource set indexes or SSB indexes associated with each indication bit in the first DCI, an index interval between neighboring reference signal resource sets or an index interval between neighboring SSBs is equal to a quantity of bits of the reference signal availability indication information.

In a possible design, the quantity of SSBs associated with the first DCI is equal to a quantity of predefined SSBs, and the quantity of predefined SSBs is determined based on a frequency band on which the SSB is located and a subcarrier spacing; the quantity of SSBs associated with the first DCI is equal to a quantity of SSBs actually sent by the network device, and the quantity of SSBs actually sent by the network device is determined based on ssb-PositionsInBurst included in SIB1 sent by the network device; or the quantity of SSBs associated with the first DCI is equal to a quantity of SSBs that is configured in the system information and that is associated with the reference signal, and the quantity of SSBs that is configured in the system information and that is associated with the reference signal is determined based on the QCL configuration information included in the configuration information of each reference signal resource set.

In a possible design, the quantity of reference signal resource sets associated with the first DCI is equal to a quantity of reference signal resource sets configured in the system information.

In a possible design, the first DCI is paging paging DCI or a paging early indication PEI.

In a possible design, when the first DCI is the paging paging DCI, the transceiver module further sends second DCI to the terminal device, where the second DCI is the paging early indication PEI. The second DCI includes a first indication bit, the first indication bit is associated with one or more SSBs, and the first indication bit indicates whether a reference signal corresponding to the SSB associated with the first indication bit is sent. The one or more SSBs associated with the first indication bit are exactly the same as the one or more SSBs associated with 1 indication bit included in the first DCI, and the one or more SSBs associated with the first indication bit include an SSB quasi-co-located with the second DCI.

It should be noted that for a specific implementation of the communication apparatus according to the fifth aspect, refer to behavior functions of the network node in the communication method according to any one of the fourth aspect or the possible designs of the fourth aspect.

According to a sixth aspect, an embodiment of this application provides a communication apparatus. The communication apparatus may be a network node, a chip in a network node, or a system-on-a-chip. The communication apparatus may implement functions performed by the network node according to the foregoing aspects or possible designs, and the functions may be implemented by hardware. In a possible design, the communication apparatus may include a transceiver and a processor. The transceiver and the processor may be configured to support the communication apparatus to implement the functions according to any one of the fourth aspect or the possible designs of the fourth aspect. For example, the processor may be configured to determine first downlink control information DCI. The transceiver may be configured to send the first DCI to a terminal device. The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set. In another possible design, the communication apparatus may further include a memory. The memory is configured to store computer-executable instructions and data that are necessary for the communication apparatus. When the communication apparatus runs, the transceiver and the processor execute the computer-executable instructions stored in the memory. The communication apparatus is enabled to perform the communication method according to any one of the fourth aspect or the possible designs of the fourth aspect.

For a specific implementation of the communication apparatus according to the sixth aspect, refer to behavior functions of the network node in the communication method according to any one of the fourth aspect or the possible designs of the fourth aspect.

According to a seventh aspect, a communication apparatus is provided. The communication apparatus includes one or more processors. The one or more processors are configured to run a computer program or instructions. When the one or more processors execute the computer program or the instructions, the communication apparatus is enabled to perform the communication method according to any one of the first aspect or the possible designs of the first aspect, or the communication method according to any one of the fourth aspect or the possible designs of the fourth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In embodiments of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eighth aspect, a communication apparatus is provided. The communication apparatus includes an input/output interface and a logic circuit. The input/output interface is configured to input and/or output information. The logic circuit is configured to perform the communication method according to any one of the first aspect or the possible designs of the first aspect, or the communication method according to any one of the fourth aspect or the possible designs of the fourth aspect, and perform processing based on the information and/or generate the information. The information includes first DCI that includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

According to a ninth aspect, a computer-readable storage medium is provided. The computer-readable storage medium stores computer instructions or a program. When the computer instructions or the program is run on a computer, the computer is enabled to perform the communication method according to any one of the first aspect or the possible designs of the first aspect, or the communication method according to any one of the fourth aspect or the possible designs of the fourth aspect.

According to a tenth aspect, a computer program product including computer instructions is provided. When the computer program product runs on a computer, the computer is enabled to perform the communication method according to any one of the first aspect or the possible designs of the first aspect, or the communication method according to any one of the fourth aspect or the possible designs of the fourth aspect.

According to an eleventh aspect, an embodiment of this application provides a computer program. When the computer program is run on a computer, the computer is enabled to perform the communication method according to any one of the first aspect or the possible designs of the first aspect, or the communication method according to any one of the fourth aspect or the possible designs of the fourth aspect.

According to a twelfth aspect, an embodiment of this application provides a chip. The chip is coupled to a memory, and is configured to read and execute program instructions stored in the memory, to perform the communication method according to any one of the first aspect or the possible designs of the first aspect, or the communication method according to any one of the fourth aspect or the possible designs of the fourth aspect.

For technical effect brought by any design manner of the seventh aspect to the twelfth aspect, refer to technical effect brought by any possible design of the first aspect, or refer to technical effect brought by any possible design of the fourth aspect.

According to a thirteenth aspect, a communication system is provided. The communication system includes the communication apparatus according to any aspect of the second aspect and the third aspect, or the communication apparatus according to any aspect of the fifth aspect and the sixth aspect.

## BRIEF DESCRIPTION OF DRAWINGS

FIG. 1 is a schematic diagram of a frame structure of a paging occasion according to an embodiment of this application;
FIG. 2 is a schematic diagram of a frame structure of a paging occasion according to an embodiment of this application;
FIG. 3 is a schematic diagram of a communication system according to an embodiment of this application;
FIG. 4 is a schematic diagram of a communication apparatus according to an embodiment of this application;
FIG. 5 is a flowchart of a communication method according to an embodiment of this application;
FIG. 6 is a schematic diagram of system information according to an embodiment of this application;
FIG. 7 is a schematic diagram of system information according to an embodiment of this application;
FIG. 8 is a schematic diagram of system information according to an embodiment of this application;
FIG. 9 is a schematic diagram of system information according to an embodiment of this application;
FIG. 10 is a schematic diagram of system information according to an embodiment of this application;
FIG. 11 is a flowchart of a communication method according to an embodiment of this application;
FIG. 12 is a schematic composition diagram of a terminal device according to an embodiment of this application;
FIG. 13 is a schematic composition diagram of a network device according to an embodiment of this application; and
FIG. 14 is a schematic composition diagram of a communication apparatus according to an embodiment of this application.

## DESCRIPTION OF EMBODIMENTS

Before embodiments of this application are described, technical terms in embodiments of this application are described.

Reference signal (reference signal, RS): In a long term evolution (long term evolution, LTE) communication system and a new radio (new radio, NR) communication system, a reference signal may be used for a plurality of purposes, for example, may be used by a terminal device to perform automatic gain control (automatic gain control, AGC) adjustment, time-frequency synchronization, beam measurement, and radio resource management (radio resource management, RRM) measurement.

In the LTE communication system, a cell-level reference signal may be a cell-specific reference signal (cell-specific reference signal, CRS), and a CRS is present in each downlink subframe.

In the NR communication system, to reduce resource overheads of a network device and avoid introducing excessive cell-level reference signals, it is finally determined that the cell-level reference signal is sent in a synchronization signal and PBCH block (synchronization signal and PBCH block, SSB). Each SSB may include a primary synchronization signal (primary synchronization signal, PSS) and a secondary synchronization signal (secondary synchronization signal, SSS).

Non-connected state: An idle (idle) state and an inactive (inactive) state may be included.

When a terminal device is in a non-connected state, the terminal device may periodically receive paging. Before receiving the paging, the terminal device needs to perform processing such as the AGC adjustment and the time-frequency synchronization in advance based on a reference signal sent by the network device, to ensure that receiving performance of the paging is good enough.

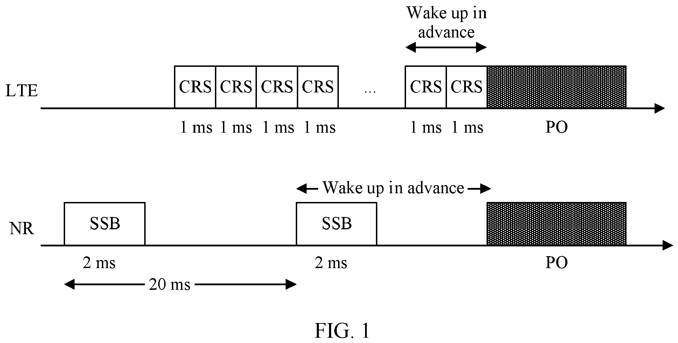

For example, as shown in FIG. 1, for the LTE communication system, because each subframe has the CRS, the terminal device only needs to wake up in advance for very short time (for example, 2 ms) to use the CRS to complete processing such as the AGC adjustment and the time-frequency synchronization, and receives paging at a paging occasion (paging occasion, PO). For the NR communication system, because an SSB period may be long, when the terminal device needs one SSB to complete AGC adjustment and time-frequency synchronization, in an extreme case, the terminal device may need to wake up in advance for long time (for example, 20 ms) to complete processing such as the AGC adjustment and the time-frequency synchronization based on the received SSB. When the terminal device needs a plurality of SSBs to complete AGC adjustment and time-frequency synchronization, the terminal device wakes up in advance for longer time (for example, 40 ms or 60 ms). However, in this case, because the terminal device wakes up in advance for long time, sleep time of the terminal device is shortened, causing power consumption waste of the terminal device.

To resolve a problem of the power consumption waste caused by the SSB design in the NR communication system, the network device may send some reference signals (the reference signal may also be referred to as an assistance reference signal (assistance RS)) to the terminal device based on system information. If locations of the reference signals are close enough to a PO, the problem of the power consumption waste caused by the SSB design can be resolved. It should be noted that the reference signals are mainly configured for the terminal device in the non-connected state, and types of the reference signals may be tracking reference signals (tracking RS, TRS).

The network device may include configuration information of the reference signal in a system information block (system information block, SIB). Specifically, the network device may configure a plurality of reference signal resource sets (resource sets), and each reference signal resource set may include a plurality of resources (resources). An SSB associated with each reference signal resource set may be configured for the reference signal resource set, to determine a receiving parameter of the reference signal (for example, a delay spread of the reference signal, a Doppler frequency shift of the reference signal, a filter parameter used when the reference signal is sent, and a sending direction of the reference signal). If the network is deployed in frequency range 2 (frequency range 2, FR2), that is, from 24.25 GHz to 52.6 GHz, the network device may send a maximum of 64 SSBs (in other words, an SSB index may range from 0 to 63) in one period (that is, in one SSB burst set). Sending directions of the SSBs may be the same or different. If it is expected that there is a corresponding reference signal in each SSB direction, 64 reference signal resource sets may need to be configured. Based on a structure of the TRS, each reference signal resource set may include two or four resources.

However, to avoid increasing a burden on the network device, it is not guaranteed that the reference signals can be always sent. For example, after the network device broadcasts configuration information of several reference signals, the reference signals corresponding to the configuration information may be sent from time to time, and may change frequently. However, generally, the system information sent by the network device does not change very frequently. If whether the reference signal is sent is notified to the terminal device by changing the system information (for example, specific reference signals in the system information indicates that the reference signals are no longer sent), the terminal device may not be notified in time. Dynamic signaling may indicate whether the reference signal is sent, to more dynamically notify the terminal device of whether the reference signal is sent.

The notifying the terminal device of whether the reference signal is sent may alternatively be described as notifying the terminal device of availability (availability) of the reference signal. If the reference signal is sent, the reference signal is available. If the reference signal is not sent, the reference signal is unavailable. Alternatively, the notifying the terminal device of whether the reference signal is sent may be described as notifying the terminal device of whether the reference signal is present. If the reference signal is sent, the reference signal is present (present). If the reference signal is not sent, the reference signal is absent (absent).

For example, the dynamic signaling may be signaling such as paging downlink control information (paging downlink control information, Paging DCI) or a paging early indication (paging early indication, PEI).

The paging DCI is DCI used to schedule a paging message. The paging message may be included in a paging physical downlink shared channel (physical downlink shared channel, PDSCH). In this case, the paging DCI schedules the paging PDSCH. Specifically, the paging message may include an identifier (UE ID) of a paged terminal device. In a 5G NR system, the UE ID may be a 5G-S-TMSI. Each terminal device may support the "receiving paging" function. Therefore, the network device may indicate, to the terminal device by using the paging DCI, whether the reference signal is sent.

The PEI is indication information sent before the PO, and the indication information may indicate whether a paging message is sent in a corresponding PO. Optionally, the PEI may also be referred to as an early paging indication (early paging indication, EPI), an early indication of paging (early indication of paging), an advanced paging indication (advanced paging indication), or another name. This is not limited herein. The PEI may alternatively be DCI. The network device may indicate, to the terminal device by using the PEI, whether the reference signal is sent, and the terminal device supporting the PEI may determine, after receiving the PEI, whether the reference signal is sent.

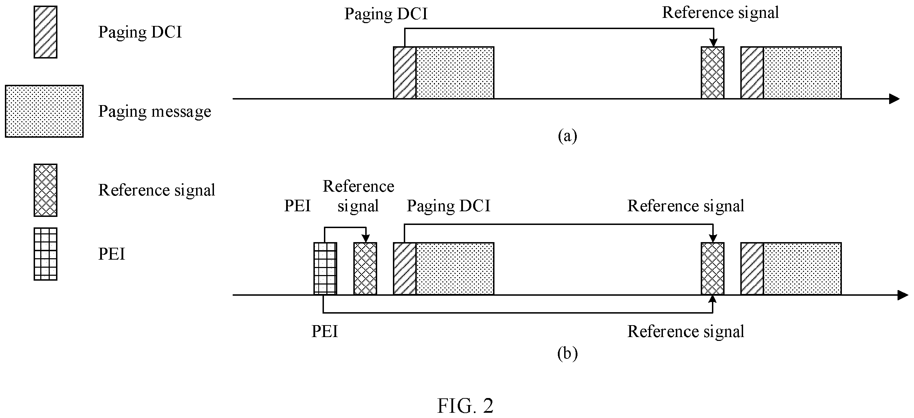

For example, as shown in FIG. 2, locations of the paging DCI and the paging message are referred to as POs. If the paging DCI indicates whether the reference signal is sent, as shown in (a) in FIG. 2, availability of a reference signal before a PO of a next paging cycle (paging cycle) is generally indicated. If the PEI indicates whether the reference signal is sent, as shown in (b) in FIG. 2, the PEI may indicate availability of a reference signal before a PO (namely, the PO corresponding to the PEI) of a current paging cycle, or may indicate availability of an assistance reference signal before a PO of a next paging cycle. In addition, because both a terminal device that supports the PEI and a terminal device that does not support the PEI may exist in a network, as shown in (b) in FIG. 2, both the PEI and the paging DCI may be used in one cell to indicate whether the reference signal is sent.

However, because a quantity of available bits in the paging DCI or the PEI is limited, how to use the limited bits to indicate a plurality of reference signal resource sets, or how to use the limited bits to indicate SSBs corresponding to the plurality of reference signals becomes a technical problem to be urgently resolved.

To resolve this problem, an embodiment of this application provides a communication method. In the method, a terminal device may receive, from a network device, first DCI that includes reference signal availability indication information, and determines, based on the first DCI, whether a reference signal is sent. The reference signal availability indication information includes one or more indication bits. Each indication bit is associated with one or more reference signal resource sets, or associated with one or more SSBs. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

In embodiments of this application, the network device may send, to the terminal device, the first DCI that includes the reference signal availability indication information. Because each indication bit in the reference signal availability indication information may be associated with the one or more reference signal resource sets, or associated with the one or more SSBs, the terminal device may determine, based on the value of each indication bit, whether the reference signal corresponding to the reference signal resource set associated with each indication bit is sent, or whether the reference signal corresponding to the SSB associated with each indication bit is sent. A mapping relationship between the indication bit, and the reference signal resource set or SSB is clearly defined in embodiments of this application. This provides a feasible solution for the network device to indicate the plurality of reference signal resource sets or the plurality of SSBs by using limited indication bits, to notify the terminal device whether corresponding reference signals are sent.

The following describes implementations of embodiments of this application in detail with reference to accompanying drawings in this specification.

The communication method provided in embodiments of this application may be applied to any communication system. The communication system may be a 3rd generation partnership project (3rd generation partnership project, 3GPP) communication system, for example, an LTE communication system, may be a 5th generation (5th generation, 5G) mobile communication system, an NR communication system, or a new radio vehicle-to-everything (vehicle-to-everything, NR V2X) system. The communication method may be applied to a system of LTE and 5G hybrid networking, or a device-to-device (device-to-device, D2D) communication system, a machine-to-machine (machine-to-machine, M2M) communication system, and an Internet of things (Internet of things, IoT) communication system and another next-generation communication system, or may alternatively be a non-3GPP communication system. This is not limited.

The communication method provided in embodiments of this application may be applied to various communication scenarios. For example, the communication method may be applied to one or more of the following communication scenarios: enhanced mobile broadband (enhanced mobile broadband, eMBB), ultra-reliable low-latency communication (ultra-reliable low-latency communication, URLLC), machine type communication (machine type communication, MTC), massive machine-type communications (massive machine-type communications, mMTC), D2D, V2X, and IoT.

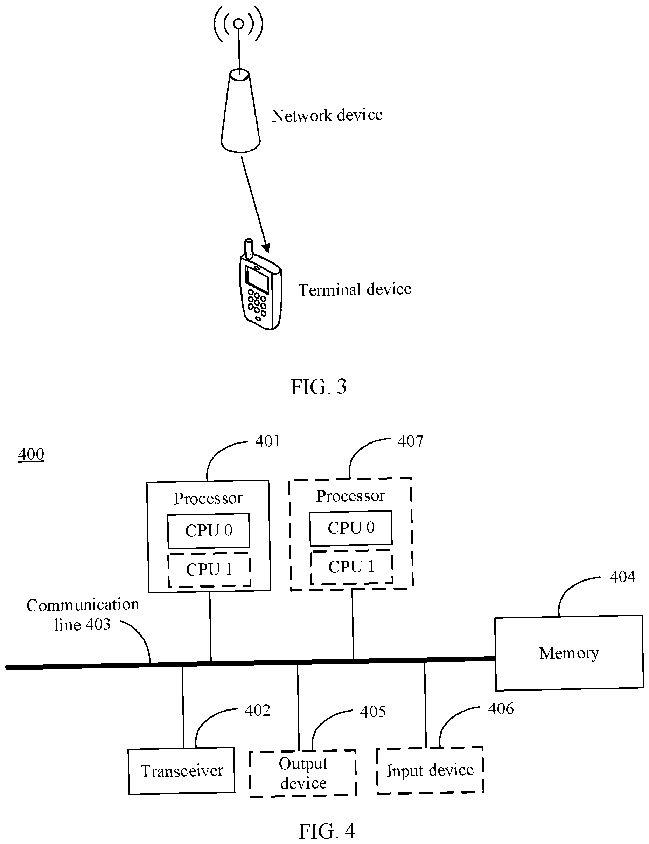

The following uses FIG. 3 as an example to de-

25      **EP 4 412 139 A1**      26

scribe a communication system provided in an embodiment of this application.

FIG. 3 is a schematic diagram of a communication system according to an embodiment of this application. As shown in FIG. 3, the communication system may include a network device and a terminal device.

The terminal device in FIG. 3 may be located in beam/cell coverage of the network device. The terminal device may perform air interface communication with the network device by using an uplink (uplink, UL) or a downlink (downlink, DL). For example, the terminal device may receive information such as system information, paging DCI, a PEI, and a reference signal that are sent by the network device. For another example, the terminal device may send uplink data to the network device in a UL direction by using a physical uplink shared channel (physical uplink shared channel, PUSCH), and the network device may send downlink data to the terminal device in a DL direction by using a physical downlink shared channel (physical downlink shared channel, PDSCH).

The terminal device in FIG. 3 may be a terminal device that supports a new air interface, and may access the communication system through an air interface, and initiate a service like a call or Internet access. The terminal device may also be referred to as user equipment (user equipment, UE), a mobile station (mobile station, MS), a mobile terminal (mobile terminal, MT), or the like. Specifically, the terminal device in FIG. 3 may be a mobile phone (mobile phone), a tablet computer, or a computer with a wireless transceiver function. Alternatively, the terminal device may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The network device in FIG. 3 may be any device having a wireless transceiver function, and is mainly configured to: implement functions such as a wireless physical control function, resource scheduling and radio resource management, a radio access control and mobility management function, and provide a reliable wireless transmission protocol, a data encryption protocol, and the like. For example, the network device may send the information such as the system information, the paging DCI, the PEI, and the reference signal to the terminal device.

The network device in FIG. 3 may be a device supporting wired access, or may be a device supporting wireless access. For example, the network device may be an access network (access network, AN)/radio access network (radio access network, RAN) device, where the AN/RAN device includes a plurality of 5G-AN/5G-RAN nodes. The 5G-AN/5G-RAN node may be an access point (access point, AP), a NodeB (NodeB, NB), an enhanced NodeB (enhance NodeB, eNB), a next-generation NodeB (NR NodeB, gNB), a transmission reception point (transmission reception point, TRP), a transmission point (transmission point, TP) another access node, or the like.

During specific implementation, as shown in FIG. 3, for example, each terminal device or each network device may use a composition structure shown in FIG. 4, or include components shown in FIG. 4. FIG. 4 is a schematic composition diagram of a communication apparatus 400 according to an embodiment of this application. The communication apparatus 400 may be a terminal device, a chip or a system-on-a-chip in the terminal device, a network device, or a chip or a system-on-a-chip in the network device. As shown in FIG. 4, the communication apparatus 400 includes a processor 401, a transceiver 402, and a communication line 403.

Further, the communication apparatus 400 may include a memory 404. The processor 401, the memory 404, and the transceiver 402 may be connected through the communication line 403.

The processor 401 is a central processing unit (central processing unit, CPU), a general purpose processor, a network processor (network processor, NP), a digital signal processor (digital signal processor, DSP), a microprocessor, a microcontroller, a programmable logic device (programmable logic device, PLD), or any combination thereof. The processor 401 may alternatively be another apparatus having a processing function, for example, a circuit, a component, or a software module. This is not limited.

The transceiver 402 is configured to communicate with another device or another communication network. The another communication network may be the Ethernet, a radio access network (radio access network, RAN), a wireless local area network (wireless local area network, WLAN), or the like. The transceiver 402 may be a module, a circuit, a transceiver, or any apparatus that can implement communication.

The communication line 403 is configured to transmit information between the components included in the communication apparatus 400.

The memory 404 is configured to store instructions. The instruction may be a computer program.

The memory 404 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or

14

another compact disc storage, an optical disc storage (including a compressed optical disc, a laser disc, an optical disc, a digital universal optical disc, a Blu-ray optical disc, or the like), a magnetic disk storage medium or another magnetic storage device, or the like. This is not limited.

It should be noted that the memory 404 may be independent of the processor 401, or may be integrated into the processor 401. The memory 404 may be configured to store instructions, program code, some data, or the like. The memory 404 may be located inside the communication apparatus 400, or may be located outside the communication apparatus 400. This is not limited. The processor 401 is configured to execute the instructions stored in the memory 404, to implement the communication method provided in the following embodiments of this application.

In an example, the processor 401 may include one or more CPUs, for example, a CPU 0 and a CPU 1 in FIG. 4.

In an optional implementation, the communication apparatus 400 includes a plurality of processors. For example, the communication apparatus 400 may further include a processor 407 in addition to the processor 401 in FIG. 4.

In an optional implementation, the communication apparatus 400 further includes an output device 405 and an input device 406. For example, the input device 406 is a keyboard, a mouse, a microphone, a joystick, or another device, and the output device 405 is a display, a speaker (speaker), or another device.

It should be noted that the communication apparatus 400 may be a desktop computer, a portable computer, a network server, a mobile phone, a tablet computer, a wireless terminal, an embedded device, a chip system, or a device having a structure similar to that in FIG. 4. In addition, the composition structure shown in FIG. 4 does not constitute a limitation on the communication apparatus. In addition to the components shown in FIG. 4, the communication apparatus may include more or fewer components than those shown in the figure, or some components may be combined, or different component arrangements may be used.

In embodiments of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

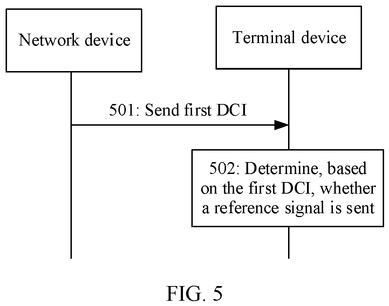

With reference to the communication system shown in FIG. 3, the following describes a communication method provided in an embodiment of this application with reference to FIG. 5. A terminal device may be any terminal device in the communication system shown in FIG. 3, and a network device may be any network device in the communication system shown in FIG. 3. The terminal device and the network device described in the following embodiment may have the components shown in FIG. 4. Processing performed by a single execution body (the terminal device or the network device) shown in embodiments of this application may also be divided into processing processed by a plurality of execution bodies, and these execution bodies may be logically and/or physically separated. For example, processing performed by the network device may be divided into processing performed by at least one of a central unit (central unit, CU), a distributed unit (distributed unit, DU), and a radio unit (radio unit, RU). This is not limited.

FIG. 5 is a flowchart of a communication method according to an embodiment of this application. As shown in FIG. 5, the method may include the following steps.

Step 501: A network device sends first DCI to a terminal device.

Step 502: The terminal device determines, based on the first DCI, whether a reference signal is sent.

The first DCI may include reference signal availability (availability of reference signal) indication information, and the reference signal availability indication information may include one or more indication bits. Each indication bit may be associated with one or more reference signal resource sets, or each indication bit may be associated with one or more SSBs. A value of the indication bit may be used to determine whether a reference signal corresponding to the associated reference signal resource set is sent, or the value of the indication bit may be used to determine whether a reference signal corresponding to the associated SSB is sent. The reference signal corresponding to the SSB may be determined based on quasi co-location (quasi co-location, QCL) configuration information included in configuration information of the reference signal resource set, and the QCL configuration information may be used to configure an SSB associated with the reference signal resource set.

The first DCI may be paging DCI or a PEI.

The network device may send system information to the terminal device. The system information may be divided into a master information block (master information block, MIB) and a plurality of SIBs. The network device may configure the configuration information of the reference signal resource set in a SIB (which may also be described as SIB-X).

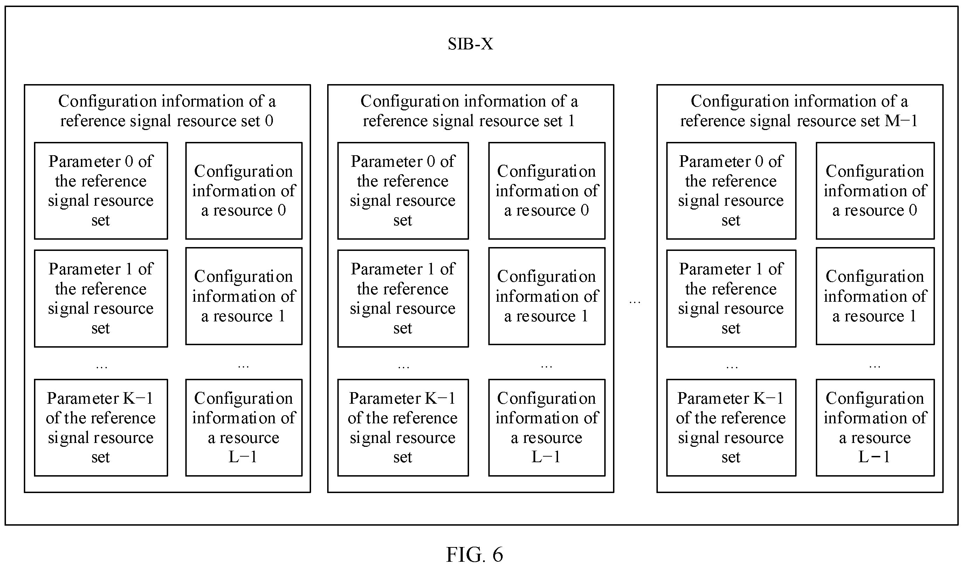

For example, as shown in FIG. 6, SIB-X may include configuration information of M reference signal resource sets, and M is a positive integer, that is, include configuration information of a reference signal resource set 0, configuration information of a reference signal resource set 1, ..., and configuration information of a reference signal resource set M-1. Configuration information of each reference signal resource set may include K parameters of the reference signal resource set, and K is a positive integer. To be specific, the configuration information of each reference signal resource set may include a parameter 0 of the reference signal resource set, a parameter 1 of the reference signal resource set, ..., and a parameter K-1 of the reference signal resource set. The configuration information of each reference signal resource set may alternatively include configuration information of L reference signal resources. To be specific, the configuration information of each reference signal resource set may alternatively include configuration information of a reference signal resource 0, configuration information of a reference signal resource 1, ..., and configuration information of a reference signal resource L-1. Configuration information of each reference signal resource may further include one or more parameters of reference signal resource. A value of L may be two or four, in other words, each reference signal resource set may include two or four reference signal resources.

For example, the parameter of the reference signal resource set may include one or more of the following:

> an SSB index associated with the reference signal resource set, which may also be described as QCL configuration information;
> firstOFDM-SymbolInTimeDomain (firstOFDM-SymbolInTimeDomain), used to determine a symbol or symbols occupied by a reference signal in a slot;
> frequencyDomainAllocation (frequencyDomainAllocation), used to determine a resource element (resource element, RE) or resource elements occupied by each of RBs occupied by the reference signal;
> a start resource block (resource block, RB) and a quantity of occupied RBs (startingRB and nrofRBs), used to determine an RB or RBs occupied by the reference signal;
> powerControlOffsetSS (powerControlOffsetSS), used to determine transmit power of the reference signal; and
> periodicityAndOffset (periodicityAndOffset), used to determine a slot or slots occupied by the reference signal.

For example, the parameter of the reference signal resource may include scramblingID (scramblingID) that is used to determine a sequence generation parameter of the reference signal.

In a first possible design, the system information sent by the network device to the terminal device includes first configuration information. The first configuration information may be used to configure a location of the indication bit that is associated with the SSB and that is in the first DCI. The terminal device determines, based on the first configuration information, the location of the indication bit that is associated with the SSB and that is in the first DCI, and determines, based on the value of the indication bit associated with the SSB, whether the reference signal corresponding to the SSB is sent. The reference signal corresponding to the SSB is specifically a reference signal corresponding to a reference signal resource set corresponding to the SSB.

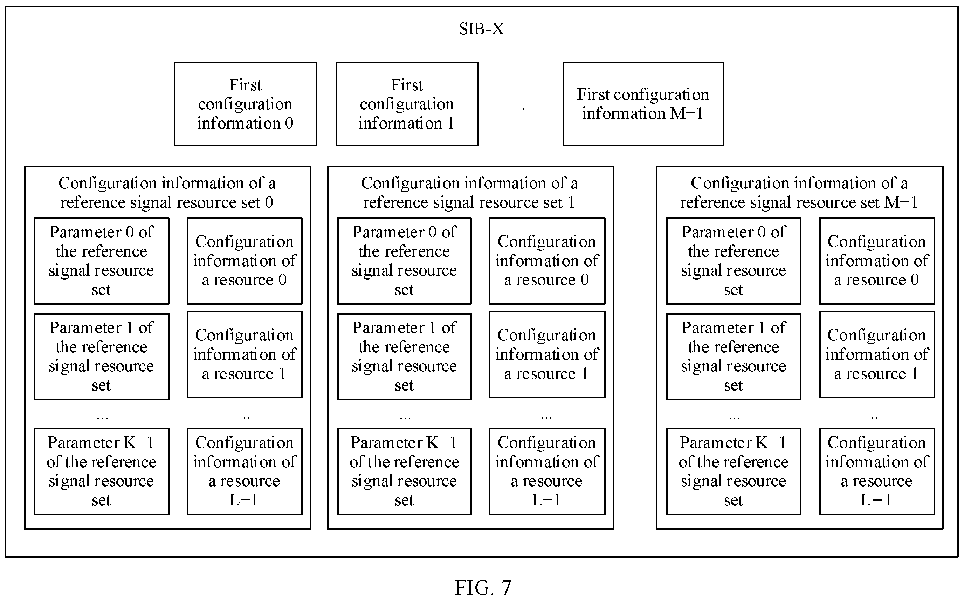

For example, as shown in FIG. 7, the system information may be SIB-X, and SIB-X may include one or more pieces of first configuration information. Each piece of first configuration information may be used to configure a location of an indication bit that is associated with one SSB and that is in the first DCI. For example, a quantity of SSBs associated with the first DCI is M. SIB-X may include first configuration information 0, first configuration information 1, ..., and first configuration information M-1. The first configuration information 0 may be used to configure a location of an indication bit that is associated with a first SSB and that is in the first DCI, the first configuration information 1 may be used to configure a location of an indication bit that is associated with a second SSB and that is in the first DCI, ..., and the first configuration information M-1 may be used to configure a location of an indication bit that is associated with an (M-1)$^{th}$ SSB and that is in the first DCI.

The one or more pieces of first configuration information may be present in SIB-X in a list form. To be specific, a first configuration information list (for example, may be associatedIndicationBitForSSB-List) may be configured in SIB-X, and the first configuration information list may include M pieces of first configuration information that respectively indicate locations of indication bits that are associated with M SSBs and that are in the first DCI. Each piece of first configuration information may be named as associatedIndicationBitForSSB, and a value range of the first configuration information may be {firstBit, secondBit, ...}. For example, when there are a maximum of 6 indication bits, the value range of the first configuration information may be {firstBit, secondBit, thirdBit, fourthBit, fifthBit, sixthBit}, in other words, the first configuration information may be one of firstBit, secondBit, thirdBit, fourthBit, fifthBit, or sixthBit.

It should be noted that, when the first configuration information is firstBit, it indicates that the indication bit corresponding to the first configuration information is a 1$^{st}$ indication bit in the first DCI; when the first configuration information is secondBit, it indicates that the indication bit corresponding to the first configuration information is a 2$^{nd}$ indication bit in the first DCI; ...; and when the first configuration information is sixthBit, it indicates that the indication bit corresponding to the first configuration information is a 6$^{th}$ indication bit in the first DCI.

The quantity M of SSBs associated with the first DCI may be a quantity of predefined SSBs, and the quantity of predefined SSBs may be determined based on a frequency band on which the SSB is located and a subcarrier spacing. The frequency band on which the SSB is located may alternatively be understood as a frequency band on which a carrier is located.

For example, when the subcarrier spacing is 15 kHz and a carrier frequency is less than or equal to 3 GHz, a maximum quantity of predefined SSBs may be four. When the subcarrier spacing is 15 kHz and the carrier frequency is greater than 3 GHz, the maximum quantity of predefined SSBs may be eight. When the subcarrier spacing is 30 kHz and the carrier frequency is less than or equal to 3 GHz, the maximum quantity of predefined SSBs may be four. When the subcarrier spacing is 30 kHz and the carrier frequency is greater than 3 GHz, the maximum quantity of predefined SSBs may be eight. When the subcarrier spacing is 120 kHz and the carrier frequency is in FR2, the maximum quantity of predefined SSBs may be 64. When the subcarrier spacing is 240 kHz and the carrier frequency is in FR2, the maximum quantity of predefined SSBs may be 64.

Alternatively, the quantity M of SSBs associated with the first DCI may be equal to a quantity of SSBs actually sent by the network device, and the quantity of SSBs actually sent by the network device may be determined based on ssb-PositionsInBurst included in SIB1 sent by the network device. ssb-PositionsInBurst is used to configure locations of the actually sent SSBs in a predefined SSB sending pattern (pattern) that is determined based on the frequency band on which the carrier is located and the subcarrier spacing.

Alternatively, the quantity M of SSBs associated with the first DCI may be equal to a quantity of SSBs that is configured in the system information and that is associated with the reference signal, and the quantity of SSBs that is configured in the system information and that is associated with the reference signal may be determined based on the QCL configuration information included in the configuration information of each reference signal resource set. For example, all reference signal resource sets included in the system information (for example, SIB-X) may be traversed, a quantity of SSBs associated with each reference signal resource set may be determined based on the QCL configuration information, and the SSBs associated with each reference signal resource set are recorded. Finally, a quantity of recorded SSBs that is counted is a value of M.

In the first possible design, a quantity of bits included in the reference signal availability indication information may be F, and F may be determined based on the first configuration information corresponding to the SSB associated with the first DCI. That the first configuration information is used to configure the location of the indication bit that is associated with the SSB and that is in the first DCI may alternatively be described as: The first configuration information is used to configure which one of all indication bits of the reference signal availability indication information is the indication bit associated with the SSB.

The quantity F of bits included in the reference signal availability indication information may be determined based on a total quantity of information bits corresponding to each piece of first configuration information.

For example, SIB-X includes the M pieces of first configuration information. It is assumed that a total quantity of information bits corresponding to the M pieces of first configuration information is four, the quantity F of bits included in the reference signal availability indication information is four. The first configuration information may be used to configure which one of the 4 indication bits of the reference signal availability indication information is the indication bit associated with the SSB.

It may be determined, based on a value of the first configuration information, which one of the 4 indication bits of the reference signal availability indication information is the indication bit associated with the SSB.

For example, the quantity F of bits included in the reference signal availability indication information is four. The first configuration information may be 2 bits. The value of the first configuration information may be set to 00 (or set to firstBit), to indicate that the first configuration information is used to configure that the indication bit associated with the SSB is a 1st indication bit in the 4 indication bits of the reference signal availability indication information. The value of the first configuration information is set to 01 (or set to secondBit), to indicate that the first configuration information is used to configure that the indication bit associated with the SSB is a 2nd indication bit in the 4 indication bits of the reference signal availability indication information. The value of the first configuration information is set to 10 (or set to thirdBit), to indicate that the first configuration information is used to configure that the indication bit associated with the SSB is a 3rd indication bit in the 4 indication bits of the reference signal availability indication information. The value of the first configuration information is set to 11 (or set to fourthBit), to indicate that the first configuration information is used to configure that the indication bit associated with the SSB is a 4th indication bit in the 4 indication bits of the reference signal availability indication information.

For another example, an upper limit of the quantity F of bits included in the reference signal availability indication information is six (for example, the value range of associatedIndicationBitForSSB is {firstBit, secondBit, thirdBit, fourthBit, fifthBit, sixthBit}). The first configuration information may be 3 bits. The value of the first configuration information may be set to 000 (or set to firstBit), to indicate that the first configuration information is used to configure that the indication bit associated with the SSB is a 1st indication bit in the 6 indication bits of the reference signal availability indication information. The value of the first configuration information is set to 001 (or set to secondBit), to indicate that the first configuration information is used to configure that the indication bit associated with the SSB is a 2nd indication bit in the 6 indication bits of the reference signal availability indication information. The value of the first configuration information is set to 010 (or set to thirdBit), to indicate that the first configuration information is used to configure that the indication bit associated with the SSB is a 3rd indication bit in the 6 indication bits of the reference signal availability indication information. The value of the first configuration information is set to 011 (or set to fourthBit), to indicate that the first configuration information is used to configure that the indication bit associated with the SSB is a 4<sup>th</sup> indication bit in the 6 indication bits of the reference signal availability indication information. If the M pieces of first configuration information included in SIB-X are traversed, it is found that a value of any piece of first configuration information is any one of {000, 001, 010, 011} (or {firstBit, secondBit, thirdBit, fourthBit}). An actual value of the quantity F of bits included in the reference signal availability indication information is four.

For still another example, the quantity F of bits included in the reference signal availability indication information is six. The first configuration information may be 3 bits. The value of the first configuration information may be set to 000 (or set to firstBit), to indicate that the first configuration information is used to configure that the indication bit associated with the SSB is a 1<sup>st</sup> indication bit in the 6 indication bits of the reference signal availability indication information. The value of the first configuration information is set to 001 (or set to thirdBit), to indicate that the first configuration information is used to configure that the indication bit associated with the SSB is a 2<sup>nd</sup> indication bit in the 6 indication bits of the reference signal availability indication information. The value of the first configuration information is set to 010 (or set to thirdBit), to indicate that the first configuration information is used to configure that the indication bit associated with the SSB is a 3<sup>rd</sup> indication bit in the 6 indication bits of the reference signal availability indication information. The value of the first configuration information is set to 011 (or set to fourthBit), to indicate that the first configuration information is used to configure that the indication bit associated with the SSB is a 4<sup>th</sup> indication bit in the 6 indication bits of the reference signal availability indication information. The value of the first configuration information is set to 100 (or set to fifthBit), to indicate that the first configuration information is used to configure that the indication bit associated with the SSB is a 5<sup>th</sup> indication bit in the 6 indication bits of the reference signal availability indication information. The value of the first configuration information is set to 101 (or set to sixthBit), to indicate that the first configuration information is used to configure that the indication bit associated with the SSB is a 6<sup>th</sup> indication bit in the 4 indication bits of the reference signal availability indication information.

The value of the indication bit may be set to zero, to indicate that the reference signal corresponding to the SSB associated with the indication bit is not sent, and the value of the indication bit may be set to one, to indicate that the reference signal corresponding to the SSB associated with the indication bit is sent. Alternatively, the value of the indication bit may be set to one, to indicate that the reference signal corresponding to the SSB associated with the indication bit is not sent, and the value of the indication bit may be set to zero, to indicate that the reference signal corresponding to the SSB associated with the indication bit is sent. This is not limited.

Based on the foregoing first possible design, when there are a plurality of reference signal resource sets for an SSB, configuration signaling overheads can be reduced by using the foregoing first possible design. For example, 128 reference signal resource sets are configured, and each SSB corresponds two reference signal resource sets. It is assumed that each piece of first configuration information includes 3 bits. 64 pieces of first configuration information need 3*64=192 bits. When the quantity of SSBs associated with the first DCI is equal to the quantity of SSBs that is determined based on ssb-PositionsInBurst in SIB1 and that is actually sent by the network device, or is equal to a quantity of SSBs associated based on a TRS configuration, the total quantity of bits of each piece of the first configuration information may be further reduced.

It should be noted that, in the foregoing description of the first configuration information, the first configuration information is understood as corresponding to one SSB, in other words, each piece of first configuration information is used to configure a location of an indication bit that is associated with the one SSB and that is in the first DCI. Alternatively, the first configuration information may be understood as corresponding to all SSBs, in other words, the first configuration information is used to configure locations of indication bits that are associated with all the SSBs and that are in the first DCI. It may be understood that one piece of first configuration information corresponding to all the SSBs is essentially equal to a plurality of pieces of first configuration information corresponding to the one SSB.

In a second possible design, system information sent by the network device to the terminal device includes second configuration information. The second configuration information is used to configure the one or more reference signal resource sets (associated resource set indexes) associated with the indication bit, or the second configuration information is used to configure the one or more SSBs (associated SSB-indexes) associated with the indication bit. The terminal device determines, based on the second configuration information, the reference signal resource set associated with each indication bit, and determines, based on a value of the indication information, whether the reference signal corresponding to the reference signal resource set associated with the indication bit is sent. Alternatively, the terminal device determines, based on the second configuration information, the SSB associated with each indication bit, and determines, based on the value of the indication information, whether the reference signal corresponding to the SSB associated with the indication bit is sent. The reference signal corresponding to the SSB is specifically a reference signal corresponding to the reference signal resource set corresponding to the SSB.

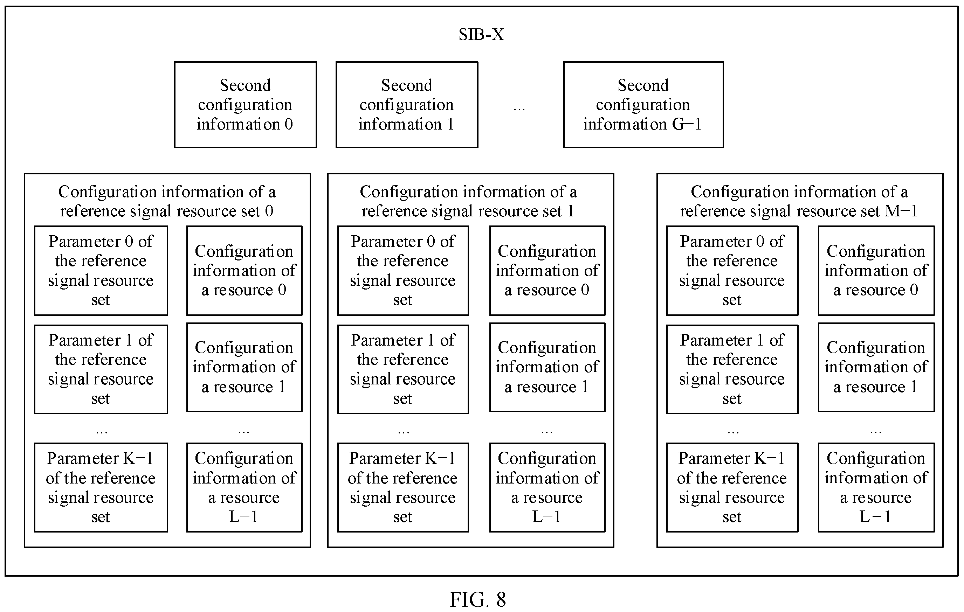

For example, as shown in FIG. 8, the system information may be SIB-X, and SIB-X may include one or more pieces of second configuration information. Each piece of second configuration information may be used to configure one or more reference signal resource sets associated with 1 indication bit, or each piece of second configuration information may be used to configure one or more SSBs associated with 1 indication bit. For example, a quantity of bits included in the reference signal availability indication information is G, and G is a positive integer. SIB-X may include second configuration information 0, second configuration information 1, ..., and second configuration information G-1. The second configuration information 0 may be used to configure one or more reference signal resource sets associated with a $1^{st}$ indication bit, or one or more SSBs associated with the $1^{st}$ indication bit; the second configuration information 1 may be used to configure one or more reference signal resource sets associated with a $2^{nd}$ indication bit, or one or more SSBs associated with the $2^{nd}$ indication bit; ...; and the second configuration information G-1 may be used to configure one or more reference signal resource sets associated with a $G^{th}$ indication bit, or one or more SSBs associated with the $G^{th}$ indication bit.

Each piece of second configuration information may be named as associatedResourceSetForIndication-Bit or associatedSSB-ForIndicationBit. For example, the second configuration information may be set in a form of a bitmap (bitmap), that is, a value of each piece of associatedResourceSetForIndicationBit or associatedSSB-ForIndicationBit is a bitmap. A length of the bitmap may be determined based on a quantity of reference signal resource sets associated with the first DCI or a quantity of SSBs associated with the first DCI.

Specifically, when the second configuration information is used to configure the one or more reference signal resource sets associated with the 1 indication bit, the length of the bitmap may be determined based on the quantity of reference signal resource sets associated with the first DCI. When the second configuration information is used to configure the one or more SSBs associated with the 1 indication bit, the length of the bitmap may be determined based on the quantity of SSBs associated with the first DCI.

The quantity of SSBs associated with the first DCI may be a quantity of predefined SSBs, and the quantity of predefined SSBs may be determined based on a frequency band on which the SSB is located and a subcarrier spacing. The frequency band on which the SSB is located may alternatively be understood as a frequency band on which a carrier is located.

For example, when the subcarrier spacing is 15 kHz and a carrier frequency is less than or equal to 3 GHz, a maximum quantity of predefined SSBs may be four, and the bitmap of the second configuration information may be 4 bits, to indicate four SSBs. When the subcarrier spacing is 15 kHz and the carrier frequency is greater than 3 GHz, the maximum quantity of predefined SSBs may be eight, and the bitmap of the second configuration information may be 8 bits, to indicate eight SSBs. When the subcarrier spacing is 30 kHz and the carrier frequency is less than or equal to 3 GHz, the maximum quantity of predefined SSBs may be four, and the bitmap of the second configuration information may be 4 bits, to indicate four SSBs. When the subcarrier spacing is 30 kHz and the carrier frequency is greater than 3 GHz, the maximum quantity of predefined SSBs may be eight, and the bitmap of the second configuration information may be 8 bits, to indicate eight SSBs. When the subcarrier spacing is 120 kHz and the carrier frequency is in FR2, the maximum quantity of predefined SSBs may be 64, and the bitmap of the second configuration information may be 64 bits, to indicate 64 SSBs. When the subcarrier spacing is 240 kHz and the carrier frequency is in FR2, the maximum quantity of predefined SSBs may be 64, and the bitmap of the second configuration information may be 64 bits, to indicate 64 SSBs.

Alternatively, the quantity of SSBs associated with the first DCI may be equal to a quantity of SSBs actually sent by the network device, and the quantity of SSBs actually sent by the network device may be determined based on ssb-PositionsInBurst included in SIB 1 sent by the network device. ssb-PositionsInBurst is used to configure locations of the actually sent SSBs in a predefined SSB sending pattern (pattern) that is determined based on the frequency band on which the carrier is located and the subcarrier spacing. For example, if it is determined, based on ssb-PositionsInBurst, that the quantity of SSBs actually sent by the network device is 20, the bitmap of the second configuration information may be 20 bits, to indicate 20 SSBs.

Alternatively, the quantity of SSBs associated with the first DCI may be equal to a quantity of SSBs that is configured in the system information and that is associated with the reference signal, and the quantity of SSBs that is configured in the system information and that is associated with the reference signal may be determined based on the QCL configuration information included in the configuration information of each reference signal resource set. For example, all reference signal resource sets included in the system information (for example, SIB-X) may be traversed, a quantity of SSBs associated with each reference signal resource set may be determined based on the QCL configuration information, and the SSBs associated with each reference signal resource set are recorded. Finally, a quantity of recorded SSBs is counted. In this case, for example, if it is determined, based on the configuration information of each reference signal resource set, that the quantity of associated SSBs is four, the bitmap of the second configuration information may be 4 bits.

The quantity of reference signal resource sets associated with the first DCI may be equal to a quantity of reference signal resource sets configured in the system information.

For example, the quantity of reference signal resource sets configured in the system information is 64, and the bitmap of the second configuration information may be 64 bits, to indicate 64 reference signal resource sets. Alternatively, an upper limit of the quantity of reference signal resource sets configured in the system information may be predefined. Based on the upper limit, the length, for example, the upper limit, of the bitmap of the second configuration information is 128, and the bitmap of the second configuration information may be 128 bits, to indicate 128 reference signal resource sets.

It should be noted that a bit in the bitmap of the second configuration information may be set to zero, to indicate that a reference signal resource set corresponding to the bit is associated with the indication bit corresponding to the second configuration information, and the bit in the bitmap of the second configuration information may be set to one, to indicate that the reference signal resource set corresponding to the bit is not associated with the indication bit corresponding to the second configuration information. Alternatively, a bit in the bitmap of the second configuration information may be set to one, to indicate that a reference signal resource set corresponding to the bit is associated with the indication bit corresponding to the second configuration information, and the bit in the bitmap of the second configuration information may be set to zero, to indicate that the reference signal resource set corresponding to the bit is not associated with the indication bit corresponding to the second configuration information. This is not limited.

Alternatively, a bit in the bitmap of the second configuration information may be set to zero, to indicate that an SSB corresponding to the bit is associated with the indication bit corresponding to the second configuration information, and the bit in the bitmap of the second configuration information may be set to one, to indicate that the SSB corresponding to the bit is not associated with the indication bit corresponding to the second configuration information. Alternatively, a bit in the bitmap of the second configuration information may be set to one, to indicate that an SSB corresponding to the bit is associated with the indication bit corresponding to the second configuration information, and the bit in the bitmap of the second configuration information may be set to zero, to indicate that the SSB corresponding to the bit is not associated with the indication bit corresponding to the second configuration information. This is not limited.

In another example, the second configuration information may be set in a form of a start and length indicator value (start and length indicator value, SLIV), in other words, the value of each piece of associatedResourceSetForIndicationBit or associatedSSB-ForIndicationBit is the SLIV In this case, each indication bit is associated with one or more consecutive reference signal resource sets or one or more consecutive SSBs. For example, for an indication bit, a start index value of a reference signal resource set associated with the indication bit may be configured by using the SLIV to be five, and an index value length is ten. In this case, the indication bit is associated with a reference signal resource set five to a reference signal resource set 14. For another example, for an indication bit, a start index value of an SSB associated with the indication bit may be configured by using the SLIV to be 16, and an index value length is eight. In this case, the indication bit is associated with a reference signal resource set 16 to a reference signal resource set 23.

In the second possible design, a quantity of bits included in the reference signal availability indication information may be G, and G may be determined based on a quantity of pieces of second configuration information included in the system information.

For example, the quantity of pieces of second configuration information included in the system information configured by the network device for the terminal device is four, and the quantity of bits included in the reference signal availability indication information may be four. For example, the quantity of pieces of second configuration information included in the system information configured by the network device for the terminal device is six, and the quantity of bits included in the reference signal availability indication information may be six.

The value of the indication bit may be set to zero, to indicate that the reference signal corresponding to the reference signal resource set associated with the indication bit is not sent, and the value of the indication bit may be set to one, to indicate that the reference signal corresponding to the reference signal resource set associated with the indication bit is sent. Alternatively, the value of the indication bit may be set to one, to indicate that the reference signal corresponding to the reference signal resource set associated with the indication bit is not sent, and the value of the indication bit may be set to zero, to indicate that the reference signal corresponding to the reference signal resource set associated with the indication bit is sent. This is not limited.

Alternatively, the value of the indication bit may be set to zero, to indicate that the reference signal corresponding to the SSB associated with the indication bit is not sent, and the value of the indication bit may be set to one, to indicate that the reference signal corresponding to the SSB associated with the indication bit is sent. Alternatively, the value of the indication bit may be set to one, to indicate that the reference signal corresponding to the SSB associated with the indication bit is not sent, and the value of the indication bit may be set to zero, to indicate that the reference signal corresponding to the SSB associated with the indication bit is sent. This is not limited.

It should be noted that, in the foregoing description of the second configuration information, the second configuration information is understood as corresponding to 1 indication bit, in other words, each piece of second configuration information is used to configure one or more reference signal resource sets associated with the 1 indication bit, or is used to configure one or more SSBs associated with the 1 indication bit. Alternatively, the second configuration information may be understood as corresponding to all indication bits, in other words, the second configuration information is used to configure one or more reference signal resource sets associated with all the indication bits, or is used to configure one or more SSBs associated with all the indication bits. It may be understood that one piece of second configuration information corresponding to all the indication bits is essentially equal to a plurality of pieces of second configuration information corresponding to the 1 indication bit.

In a third possible design, the configuration information of the reference signal resource set of the system information sent by the network device to the terminal device may include fourth configuration information. The fourth configuration information may be used to configure a location of the indication bit that is associated with the reference signal resource set and that is in the first DCI. The terminal device determines, based on the fourth configuration information, the location of the indication bit that is associated with the reference signal resource set and that is in the first DCI, and determines, based on the value of the indication bit associated with the reference signal resource set, whether the reference signal corresponding to the reference signal resource set is sent. Each piece of fourth configuration information may be named as associatedIndicationBit, and a value range of the fourth configuration information may be {firstBit, secondBit, ...}. For example, when there are a maximum of 6 indication bits, the value range may be {firstBit, secondBit, thirdBit, fourthBit, fifthBit, sixthBit}. In other words, the fourth configuration information may be one of firstBit, secondBit, thirdBit, fourthBit, fifthBit, or sixthBit.

It should be noted that, when the fourth configuration information is firstBit, it indicates that the indication bit corresponding to the fourth configuration information is a $1^{st}$ indication bit in the first DCI; when the fourth configuration information is secondBit, it indicates that the indication bit corresponding to the fourth configuration information is a $2^{nd}$ indication bit in the first DCI; ...; and when the fourth configuration information is sixthBit, it indicates that the indication bit corresponding to the fourth configuration information is a $6^{th}$ indication bit in the first DCI.

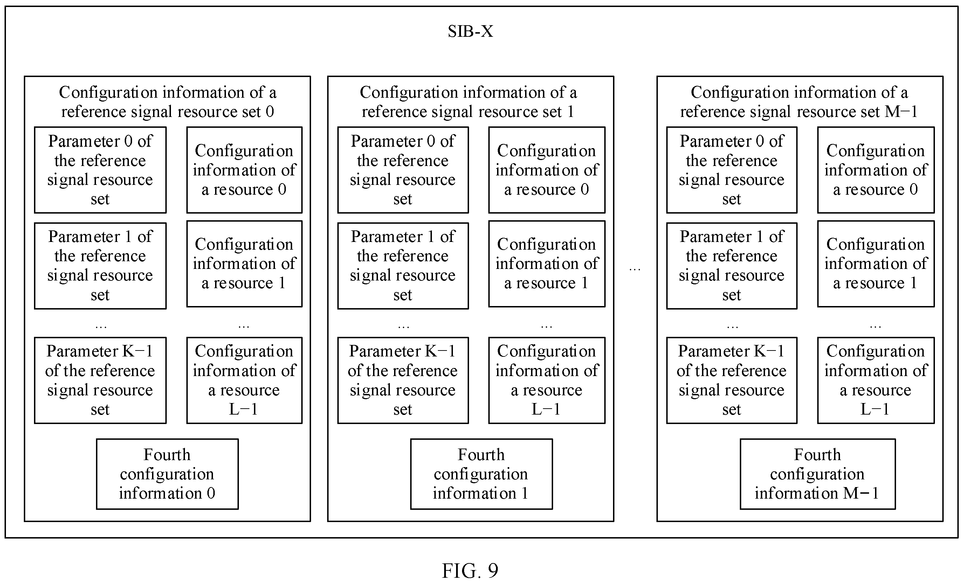

For example, as shown in FIG. 9, the system information may be SIB-X, and SIB-X may include configuration information of the one or more reference signal resource sets. Configuration information of each reference signal resource set may include one piece of fourth configuration information, and the fourth configuration information may be used to configure the location of the indication bit that is associated with the reference signal resource set and that is in the first DCI. For example, a quantity of reference signal resource sets associated with the first DCI is M. Configuration information of the M reference signal resource sets in SIB-X may include fourth configuration information 0, fourth configuration information 1, ..., and fourth configuration information M-1. The fourth configuration information 0 may be used to configure a location of an indication bit that is associated with a reference signal resource set 0 and that is in the first DCI, the fourth configuration information 1 may be used to configure a location of an indication bit that is associated with a reference signal resource set 1 and that is in the first DCI, ..., and the fourth configuration information M-1 may be used to configure a location of an indication bit that is associated with a reference signal resource set M-1 and that is in the first DCI.

The quantity of reference signal resource sets associated with the first DCI may be equal to a quantity of reference signal resource sets configured in the system information.

In the third possible design, a quantity of bits included in the reference signal availability indication information may be E, and E may be determined based on the fourth configuration information corresponding to the reference signal resource set associated with the first DCI. That the fourth configuration information is used to configure the location of the indication bit that is associated with the reference signal resource set and that is in the first DCI may alternatively be described as: The fourth configuration information is used to configure which one of all indication bits of the reference signal availability indication information is the indication bit associated with the reference signal resource set.

The quantity E of bits included in the reference signal availability indication information may be determined based on a total quantity of information bits corresponding to each piece of fourth configuration information.

For example, SIB-X includes the M pieces of fourth configuration information. It is assumed that a total quantity of information bits corresponding to the M pieces of fourth configuration information is four, the quantity F of bits included in the reference signal availability indication information is four. The fourth configuration information may be used to configure which one of the 4 indication bits of the reference signal availability indication information is the indication bit associated with the reference signal resource set.

It may be determined, based on a value of the fourth configuration information, which one of the 4 indication bits of the reference signal availability indication information is the indication bit associated with the reference signal resource set.

For example, the quantity E of bits included in the reference signal availability indication information is four. The fourth configuration information may be 2 bits. The value of the fourth configuration information may be set to 00 (or set to firstBit), to indicate that the fourth configuration information is used to configure that the indication bit associated with the reference signal resource set is a $1^{st}$ indication bit in the 4 indication bits of the reference signal availability indication information. The value of the fourth configuration information is set to 01 (or set to secondBit), to indicate that the fourth configuration information is used to configure that the indication bit associated with the reference signal resource set is a $2^{nd}$ indication bit in the 4 indication bits of the reference signal availability indication information. The value of the fourth configuration information is set to 10 (or set to thirdBit), to indicate that the fourth configuration information is used to configure that the indication bit associated with the reference signal resource set is a 3rd indication bit in the 4 indication bits of the reference signal availability indication information. The value of the fourth configuration information is set to 11 (or set to fourthBit), to indicate that the fourth configuration information is used to configure that the indication bit associated with the reference signal resource set is a 4th indication bit in the 4 indication bits of the reference signal availability indication information.

For another example, an upper limit of the quantity E of bits included in the reference signal availability indication information is six (for example, the value range of associatedIndicationBit is {firstBit, secondBit, thirdBit, fourthBit, fifthBit, sixthBit}). The fourth configuration information may be 3 bits. The value of the fourth configuration information may be set to 000 (or set to firstBit), to indicate that the fourth configuration information is used to configure that the indication bit associated with the SSB is a 1st indication bit in the 6 indication bits of the reference signal availability indication information. The value of the fourth configuration information is set to 001 (or set to secondBit), to indicate that the fourth configuration information is used to configure that the indication bit associated with the SSB is a 2nd indication bit in the 6 indication bits of the reference signal availability indication information. The value of the fourth configuration information is set to 010 (or set to thirdBit), to indicate that the fourth configuration information is used to configure that the indication bit associated with the SSB is a 3rd indication bit in the 6 indication bits of the reference signal availability indication information. The value of the fourth configuration information is set to 011 (or set to fourthBit), to indicate that the fourth configuration information is used to configure that the indication bit associated with the SSB is a 4th indication bit in the 6 indication bits of the reference signal availability indication information. If the M pieces of fourth configuration information included in SIB-X are traversed, it is found that a value of any piece of fourth configuration information is any one of {000, 001, 010, 011} (or {firstBit, secondBit, thirdBit, fourthBit}). An actual value of the quantity E of bits included in the reference signal availability indication information is four.

For still another example, the quantity E of bits included in the reference signal availability indication information is six. The fourth configuration information may be 3 bits. The value of the fourth configuration information may be set to 000 (or set to firstBit), to indicate that the fourth configuration information is used to configure that the indication bit associated with the reference signal resource set is a 1st indication bit in the 6 indication bits of the reference signal availability indication information. The value of the fourth configuration information is set to 001 (or set to secondBit), to indicate that the fourth configuration information is used to configure that the indication bit associated with the reference signal resource

set is a 2nd indication bit in the 6 indication bits of the reference signal availability indication information. The value of the fourth configuration information is set to 010 (or set to thirdBit), to indicate that the fourth configuration information is used to configure that the indication bit associated with the reference signal resource set is a 3rd indication bit in the 6 indication bits of the reference signal availability indication information. The value of the fourth configuration information is set to 011 (or set to fourthBit), to indicate that the fourth configuration information is used to configure that the indication bit associated with the reference signal resource set is a 4th indication bit in the 6 indication bits of the reference signal availability indication information. The value of the fourth configuration information is set to 100 (or set to fifthBit), to indicate that the fourth configuration information is used to configure that the indication bit associated with the reference signal resource set is a 5th indication bit in the 6 indication bits of the reference signal availability indication information. The value of the fourth configuration information is set to 101 (or set to sixthBit), to indicate that the fourth configuration information is used to configure that the indication bit associated with the reference signal resource set is a 6th indication bit in the 4 indication bits of the reference signal availability indication information.

The value of the indication bit may be set to zero, to indicate that the reference signal corresponding to the reference signal resource set associated with the indication bit is not sent, and the value of the indication bit may be set to one, to indicate that the reference signal corresponding to the reference signal resource set associated with the indication bit is sent. Alternatively, the value of the indication bit may be set to one, to indicate that the reference signal corresponding to the reference signal resource set associated with the indication bit is not sent, and the value of the indication bit may be set to zero, to indicate that the reference signal corresponding to the reference signal resource set associated with the indication bit is sent. This is not limited.

Based on the foregoing third possible design, for example, 128 reference signal resource sets are configured. It is assumed that each piece of fourth configuration information includes 3 bits. 128 pieces of fourth configuration information need 3*128=384 bits.

It should be noted that, in the foregoing description of the fourth configuration information, the fourth configuration information is understood as corresponding to one reference signal resource set, in other words, each piece of fourth configuration information is used to configure a location of an indication bit that is associated with the one reference signal resource set and that is in the first DCI. Alternatively, the fourth configuration information may be understood as corresponding to all reference signal resource sets, in other words, the fourth configuration information is used to configure locations of indication bits that are associated with all the reference signal resource sets and that are in the first DCI. It may be understood that one piece of fourth configuration information corresponding to all the reference signal resource sets is essentially equal to a plurality of pieces of fourth configuration information corresponding to the one reference signal resource set.

In a fourth possible design, the system information sent by the network device to the terminal device may include third configuration information. The third configuration information may be used to configure a quantity of reference signal resource sets associated with each indication bit, or the third configuration information is used to configure a quantity of SSBs associated with each indication bit.

When the third configuration information is used to configure the quantity of reference signal resource sets associated with each indication bit, the terminal device may determine, based on the third configuration information, the quantity of reference signal resource sets associated with each indication bit, determine, based on the quantity of reference signal resource sets associated with each indication bit, the reference signal resource set associated with each indication bit, and determine, based on the value of the indication bit, whether the reference signal corresponding to the reference signal resource set associated with the indication bit is sent.

Alternatively, when the third configuration information is used to configure the quantity of SSBs associated with each indication bit, the terminal device may determine, based on the third configuration information, the quantity of SSBs associated with each indication bit, determine, based on the quantity of SSBs associated with each indication bit, the SSB associated with each indication bit, and determine, based on the value of the indication bit, whether the reference signal corresponding to the SSB associated with the indication bit is sent.

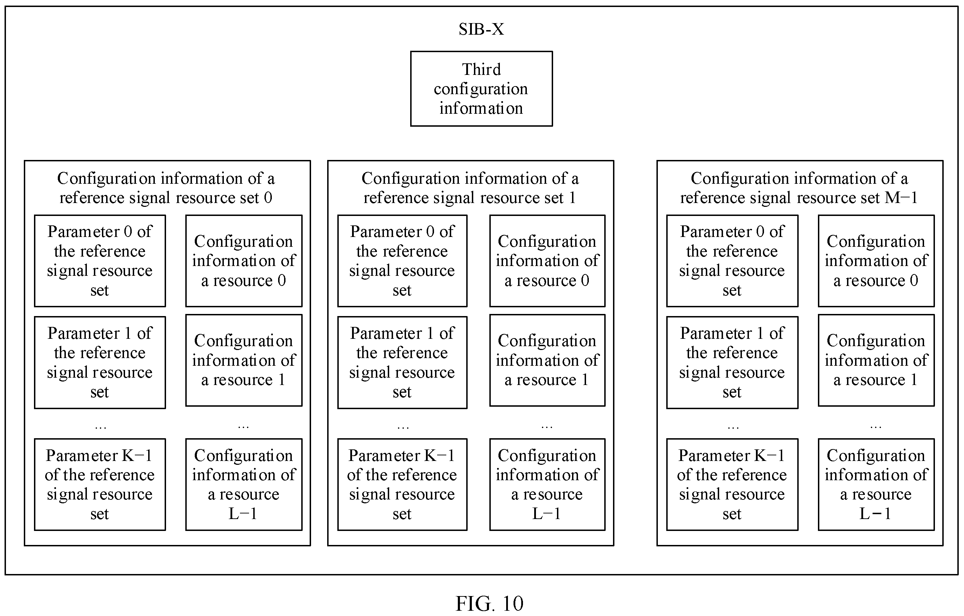

For example, as shown in FIG. 10, the system information may be SIB-X, and SIB-X may include the third configuration information. The third configuration information is used to configure the quantity of reference signal resource sets associated with each indication bit, or the third configuration information is used to configure the quantity of SSBs associated with each indication bit.

In the fourth possible design, the reference signal availability indication information may include a maximum of N bits, and N is a positive integer. A quantity of reference signal resource sets associated with the first DCI is M, or a quantity of SSBs associated with the first DCI is M, and M is a positive integer.

The quantity M of SSBs associated with the first DCI may be a quantity of predefined SSBs, and the quantity of predefined SSBs may be determined based on a frequency band on which the SSB is located and a subcarrier spacing. The frequency band on which the SSB is located may alternatively be understood as a frequency band on which a carrier is located.

For example, when the subcarrier spacing is 15 kHz and a carrier frequency is less than or equal to 3 GHz, a maximum quantity of predefined SSBs may be four. When the subcarrier spacing is 15 kHz and the carrier frequency is greater than 3 GHz, the maximum quantity of predefined SSBs may be eight. When the subcarrier spacing is 30 kHz and the carrier frequency is less than or equal to 3 GHz, the maximum quantity of predefined SSBs may be four. When the subcarrier spacing is 30 kHz and the carrier frequency is greater than 3 GHz, the maximum quantity of predefined SSBs may be eight. When the subcarrier spacing is 120 kHz and the carrier frequency is in FR2, the maximum quantity of predefined SSBs may be 64. When the subcarrier spacing is 240 kHz and the carrier frequency is in FR2, the maximum quantity of predefined SSBs may be 64.

Alternatively, the quantity M of SSBs associated with the first DCI may be equal to a quantity of SSBs actually sent by the network device, and the quantity of SSBs actually sent by the network device may be determined based on ssb-PositionsInBurst included in SIB1 sent by the network device. ssb-PositionsInBurst is used to configure locations of the actually sent SSBs in a predefined SSB sending pattern (pattern) that is determined based on the frequency band on which the carrier is located and the subcarrier spacing.

Alternatively, the quantity M of SSBs associated with the first DCI may be equal to a quantity of SSBs that is configured in the system information and that is associated with the reference signal, and the quantity of SSBs that is configured in the system information and that is associated with the reference signal may be determined based on the QCL configuration information included in the configuration information of each reference signal resource set. For example, all reference signal resource sets included in the system information (for example, SIB-X) may be traversed, a quantity of SSBs associated with each reference signal resource set may be determined based on the QCL configuration information, and the SSBs associated with each reference signal resource set are recorded. Finally, a quantity of recorded SSBs that is counted is a value of M.

The quantity M of reference signal resource sets associated with the first DCI may be equal to a quantity of reference signal resource sets configured in the system information.

When the quantity of reference signal resource sets associated with each indication bit or the quantity of SSBs associated with each indication bit is configured as K in the third configuration information, the quantity of bits in the one or more indication bits may be $N = \left\lceil \frac{M}{K} \right\rceil$.

Case 1: When K is equal to one, the quantity of bits in the one or more indication bits may be M, and M=N; and each indication bit may one-to-one correspond to one reference signal resource set, or each indication bit may one-to-one correspond to one SSB.

For example, reference signal resource set indexes or SSB indexes associated with each indication bit in the first DCI are in ascending or descending order.

For example, the quantity of reference signal resource sets associated with the first DCI is six, and the quantity K of reference signal resource sets associated with each indication bit is configured as one in the third configuration information. The quantity of indication bits is six. It is assumed that the reference signal resource set indexes associated with the indication bits in the first DCI are in ascending order. The 1st indication bit is associated with a reference signal resource set with a smallest index, the 2nd indication bit is associated with a reference signal resource set with a second smallest index, and the rest can be deduced by analogy. The 6th indication bit is associated with a reference signal resource set with a largest index. It is assumed that the reference signal resource set indexes associated with the indication bits in the first DCI are in descending order. The 1st indication bit is associated with a reference signal resource set with a largest index, the 2nd indication bit is associated with a reference signal resource set with a second largest index, and the rest can be deduced by analogy. The 6th indication bit is associated with a reference signal resource set with a smallest index.

For another example, the quantity of SSBs associated with the first DCI is four, and the quantity K of reference signal resource sets associated with each indication bit is configured as one in the third configuration information. The quantity of indication bits is four. It is assumed that the SSB indexes associated with the indication bits in the first DCI are in ascending order. The 1st indication bit is associated with an SSB with a smallest index, the 2nd indication bit is associated with an SSB with a second smallest index, and the rest can be deduced by analogy. The 4th indication bit is associated with an SSB with a largest index. It is assumed that the SSB indexes associated with the indication bits in the first DCI are in descending order. The 1st indication bit is associated with an SSB with a largest index, the 2nd indication bit is associated with an SSB with a second largest index, and the rest can be deduced by analogy. The 4th indication bit is associated with an SSB with a smallest index.

Case 2: When K is greater than one, N is less than M, there are Q indication bits in the N indication bits, each of the Q indication bits is associated with A reference signal resource sets or A SSBs, and each of remaining (N-Q) indication bits in the N indication bits is associated with B reference signal resource sets or B SSBs. Q is a remainder of dividing M by N, that is, Q=M%N. A is a round-up result of dividing M by N, that is, $A=\left\lceil\frac{M}{N}\right\rceil$. B is a round-down result of dividing M by N, that is, $B=\left\lfloor\frac{M}{N}\right\rfloor$. This enables the quantity of reference signal resource sets or SSBs corresponding to each indication bit to be as the same or similar as possible. It may be understood that A is equal to K in this case.

For example, the quantity of reference signal resource sets or SSBs associated with the first DCI is 40, and the quantity K of reference signal resource sets associated with each indication bit is configured as seven in the third configuration information. The quantity of indication bits is six. Q=40%6=4, $A=K=\left\lceil\frac{40}{6}\right\rceil=7$, =7, N-Q=2, and $B=\left\lfloor\frac{40}{6}\right\rfloor=6$. To be specific, each of 4 indication bits is associated with seven reference signal resource sets or seven SSBs, and each of the remaining 2 indication bits is associated with six reference signal resource sets or six SSBs.

It should be noted that the Q indication bits may be first Q indication bits in the N indication bits, or last Q indication bits in the N indication bits. This is not limited.

Reference signal resource set indexes or SSB indexes associated with each indication bit in the first DCI may be in ascending or descending order.

For example, the quantity of reference signal resource sets associated with the first DCI is 64, and the quantity K of reference signal resource sets associated with each indication bit is configured as 11 in the third configuration information. The reference signal availability indication information may include 6 bits. In the 6 indication bits, 4 indication bits are associated with 11 reference signal resource sets or SSBs, and 2 indication bits are associated with ten reference signal resource sets or SSBs.

If reference signal resource set indexes or SSB indexes associated with each indication bit in the first DCI are in ascending order, an indication bit at the front is associated with more reference signal resource sets or SSBs, and an indication bit at the back is associated with fewer reference signal resource sets or SSBs, reference signal resource set indexes or SSB indexes (resource set indexes/SSB indexes) associated with firstBit are from 0 to 10, reference signal resource set indexes or SSB indexes associated with secondBit are from 11 to 21, reference signal resource set indexes or SSB indexes associated with thirdBit are from 22 to 32, reference signal resource set indexes or SSB indexes associated with fourthBit are from 33 to 43, reference signal resource set indexes or SSB indexes associated with fifthBit are from 44 to 53, and reference signal resource set indexes or SSB indexes associated with sixthBit are from 54 to 63.

It should be noted that the indication bit corresponding to firstBit is the 1st indication bit in the first DCI; the indication bit corresponding to secondBit is the 2nd indication bit in the first DCI; ...; and the indication bit corresponding to sixthBit is the 6th indication bit in the first DCI.

If reference signal resource set indexes or SSB indexes associated with each indication bit in the first DCI are in ascending order, an indication bit at the front is associated with fewer reference signal resource sets or SSBs, and an indication bit at the back is associated with more reference signal resource sets or SSBs, reference signal resource set indexes or SSB indexes associated with firstBit are from 0 to 9, reference signal resource set indexes or SSB indexes associated with secondBit are from 10 to 19, reference signal resource set indexes or SSB indexes associated with thirdBit are from 20 to 30, reference signal resource set indexes or SSB indexes associated with fourthBit are from 31 to 41, reference signal resource set indexes or SSB indexes associated with fifthBit are from 42 to 52, and reference signal resource set indexes or SSB indexes associated with sixthBit are from 53 to 63.

If reference signal resource set indexes or SSB indexes associated with each indication bit in the first DCI are in descending order, an indication bit at the front is associated with more reference signal resource sets or SSBs, and an indication bit at the back is associated with fewer reference signal resource sets or SSBs, reference signal resource set indexes or SSB indexes associated with firstBit are from 53 to 63, reference signal resource set indexes or SSB indexes associated with secondBit are from 42 to 52, reference signal resource set indexes or SSB indexes associated with thirdBit are from 31 to 41, reference signal resource set indexes or SSB indexes associated with fourthBit are from 20 to 30, reference signal resource set indexes or SSB indexes associated with fifthBit are from 10 to 19, and reference signal resource set indexes or SSB indexes associated with sixthBit are from 0 to 9.

If reference signal resource set indexes or SSB indexes associated with each indication bit in the first DCI are in descending order, an indication bit at the front is associated with fewer reference signal resource sets or SSBs, and an indication bit at the back is associated with more reference signal resource sets or SSBs, reference signal resource set indexes or SSB indexes associated with firstBit are from 54 to 63, reference signal resource set indexes or SSB indexes associated with secondBit are from 44 to 53, reference signal resource set indexes or SSB indexes associated with thirdBit are from 33 to 43, reference signal resource set indexes or SSB indexes associated with fourthBit are from 22 to 32, reference signal resource set indexes or SSB indexes associated with fifthBit are from 11 to 21, and reference signal resource set indexes or SSB indexes associated with sixthBit are from 0 to 10.

It should be noted that, in some cases, not all SSBs are configured with associated reference signals. For example, a value of M is determined based on a quantity of SSBs associated with all reference signals that are configured in SIB-X. For example, the network device configures 32 reference signal resource sets, which are respectively associated with SSB#0 to SSB#15, and SSB#48 to SSB#63. It is assumed that N=6. If the SSB indexes in ascending order is used for correspondence, an indication bit at the front is associated with more SSBs, and an indication bit at the back is associated with fewer SSBs, SSB indexes associated with firstBit are from 0 to 5, SSB indexes associated with secondBit are from 6 to 11, SSB indexes associated with thirdBit are from 12 to 15, and 48, SSB indexes associated with fourthBit are from 49 to 53, SSB indexes associated with fifthBit are from 54 to 58, and SSB indexes associated with the bit 6 are from 59 to 63.

Alternatively, in the reference signal resource set indexes or SSB indexes associated with each indication bit in the first DCI, an index interval between neighboring reference signal resource sets or an index interval between neighboring SSBs is equal to a quantity of bits of the reference signal availability indication information.

For example, K is equal to six, and M is equal to 36 (it is assumed that the reference signal resource set indexes or SSB indexes are from 0 to 35). N is equal to six, in other words, there are 6 indication bits, and each indication bit may be associated with six reference signal resource sets or six SSBs. In this case, if the reference signal resource set indexes or SSB indexes associated with each indication bit in the first DCI are in ascending order, the reference signal resource set indexes or SSB indexes associated with firstBit are equal to {0,6,12,18,24,30}, the reference signal resource set indexes or SSB indexes associated with secondBit are equal to {1,7,13,19,25,31}, the reference signal resource set indexes or SSB indexes associated with thirdBit are equal to {2,8,14,20,26,32}, the reference signal resource set indexes or SSB indexes associated with fourthBit are equal to {3,9,15,21,27,33}, the reference signal resource set indexes or SSB indexes associated with fifthBit are equal to {4,10,16,22,28,34}, and the reference signal resource set indexes or SSB indexes associated with sixthBit are equal to {5,11,17,23,29,35}.

Case 3: When K is greater than one, N is less than M, a quantity of bits in the one or more indication bits may be $N=\left\lceil\frac{M}{K}\right\rceil$, and each of P indication bits in the N indication bits is associated with A reference signal resource sets or A SSBs. (P*A) is less than or equal to M, ((P+1)*A) is greater than M, and A is a round-up result of dividing M by N, that is $A=\left\lceil\frac{M}{N}\right\rceil$. It may be understood that A is equal to K in this case.

For example, the quantity of reference signal resource sets or SSBs associated with the first DCI is eight, and the quantity K of reference signal resource sets associated with each indication bit is configured as two in the third configuration information. The quantity of indication bits is four. Each indication bit is associated with two reference signal resource sets or two SSBs.

For another example, the quantity of reference signal resource sets or SSBs associated with the first DCI is ten, and the quantity K of reference signal resource sets associated with each indication bit is configured as two in the third configuration information. The quantity of indication bits is five. Each indication bit is associated with two reference signal resource sets or two SSBs.

When (P*A) is less than M, a (P+1)th bit in the N indication bits is associated with (M-P*A) reference signal resource sets or (M-P*A) SSBs.

For example, the quantity of reference signal resource sets or SSBs associated with the first DCI is 11, and the quantity K of reference signal resource sets associated with each indication bit is configured as two in the third configuration information. The quantity of indication bits is six. P=5, and M-P*A=1. To be specific, each of 5 indication bits in the 6 bits is associated with two reference signal resource sets or two SSBs, and the remaining 1 bit is associated with one reference signal resource set or one SSB.

The reference signal resource set indexes or SSB indexes associated with each indication bit in the first DCI may be in ascending or descending order. For the description, reference may be made to the related description in the foregoing case 2. Details are not described again.

Alternatively, in the reference signal resource set indexes or SSB indexes associated with each indication bit in the first DCI, the index interval between the neighboring reference signal resource sets or the index interval between the neighboring SSBs is equal to the quantity of bits of the reference signal availability indication information. For the description, reference may be made to the related description in the foregoing case 2. Details are not described again.

In the fourth possible design, the value of the indication bit may be set to zero, to indicate that the reference signal corresponding to the reference signal resource set associated with the indication bit is not sent, and the value of the indication bit may be set to one, to indicate that the reference signal corresponding to the reference signal resource set associated with the indication bit is sent. Alternatively, the value of the indication bit may be set to one, to indicate that the reference signal corresponding to the reference signal resource set associated with the indication bit is not sent, and the value of the indication bit may be set to zero, to indicate that the reference signal corresponding to the reference signal resource set associated with the indication bit is sent. This is not limited.

In a fifth possible design, an association relationship between the indication bit in the first DCI, and the reference signal resource set or SSB may be predefined. The terminal device may determine the association relationship between the indication bit in the first DCI, and the reference signal resource set or SSB based on a predefined rule, and determine, based on the value of the indication bit, whether the reference signal corresponding to the reference signal resource set or SSB associated with the indication bit is sent.

The reference signal availability indication information may include a maximum of N bits, and N is a positive integer. A quantity of reference signal resource sets associated with the first DCI is M, or a quantity of SSBs associated with the first DCI is M, and M is a positive integer.

The maximum value N of bits included in the reference signal availability indication information may be predefined, or may be configured by the network device. This is not limited.

The quantity M of SSBs associated with the first DCI may be a quantity of predefined SSBs, and the quantity of predefined SSBs may be determined based on a frequency band on which the SSB is located and a subcarrier spacing. The frequency band on which the SSB is located may alternatively be understood as a frequency band on which a carrier is located.

For example, when the subcarrier spacing is 15 kHz and a carrier frequency is less than or equal to 3 GHz, a maximum quantity of predefined SSBs may be four. When the subcarrier spacing is 15 kHz and the carrier frequency is greater than 3 GHz, the maximum quantity of predefined SSBs may be eight. When the subcarrier spacing is 30 kHz and the carrier frequency is less than or equal to 3 GHz, the maximum quantity of predefined SSBs may be four. When the subcarrier spacing is 30 kHz and the carrier frequency is greater than 3 GHz, the maximum quantity of predefined SSBs may be eight. When the subcarrier spacing is 120 kHz and the carrier frequency is in FR2, the maximum quantity of predefined SSBs may be 64. When the subcarrier spacing is 240 kHz and the carrier frequency is in FR2, the maximum quantity of predefined SSBs may be 64.

Alternatively, the quantity M of SSBs associated with the first DCI may be equal to a quantity of SSBs actually sent by the network device, and the quantity of SSBs actually sent by the network device may be determined based on ssb-PositionsInBurst included in SIB1 sent by the network device. ssb-PositionsInBurst is used to configure locations of the actually sent SSBs in a predefined SSB sending pattern (pattern) that is determined based on the frequency band on which the carrier is located and the subcarrier spacing.

Alternatively, the quantity M of SSBs associated with the first DCI may be equal to a quantity of SSBs that is configured in the system information and that is associated with the reference signal, and the quantity of SSBs that is configured in the system information and that is associated with the reference signal may be determined based on the QCL configuration information included in the configuration information of each reference signal resource set. For example, all reference signal resource sets included in the system information (for example, SIB-X) may be traversed, a quantity of SSBs associated with each reference signal resource set may be determined based on the QCL configuration information, and the SSBs associated with each reference signal resource set are recorded. Finally, a quantity of recorded SSBs that is counted is a value of M.

The quantity M of reference signal resource sets associated with the first DCI may be equal to a quantity of reference signal resource sets configured in the system information.

Case 1: When N is greater than or equal to M, the quantity of bits in the one or more indication bits may be M; and each indication bit may one-to-one correspond to one reference signal resource set, or each indication bit may one-to-one correspond to one SSB.

For example, reference signal resource set indexes or SSB indexes associated with each indication bit in the first DCI are in ascending or descending order.

For example, the reference signal availability indication information may include a maximum of 6 bits, and the quantity of reference signal resource sets associated with the first DCI is six. The quantity of indication bits is six. It is assumed that the reference signal resource set indexes associated with the indication bits in the first DCI are in ascending order. The 1st indication bit is associated with a reference signal resource set with a smallest index, the 2nd indication bit is associated with a reference signal resource set with a second smallest index, and the rest can be deduced by analogy. The 6th indication bit is associated with a reference signal resource set with a largest index. It is assumed that the reference signal resource set indexes associated with the indication bits in the first DCI are in descending order. The 1st indication bit is associated with a reference signal resource set with a largest index, the 2nd indication bit is associated with a reference signal resource set with a second largest index, and the rest can be deduced by analogy. The 6th indication bit is associated with a reference signal resource set with a smallest index.

For another example, the reference signal availability indication information may include a maximum of 6 bits, and the quantity of SSBs associated with the first DCI is four. The quantity of indication bits is four. It is assumed that the SSB indexes associated with each indication bit in the first DCI are in ascending order. The 1st indication bit is associated with an SSB with a smallest index, the 2nd indication bit is associated with an SSB with a second smallest index, and the rest can be deduced by analogy. The 4th indication bit is associated with an SSB with a largest index. It is assumed that the SSB indexes associated with each indication bit in the first DCI are in descending order. The 1st indication bit is associated with an SSB with a largest index, the 2nd indication bit is associated with an SSB with a second largest index, and the rest can be deduced by analogy. The 4th indication bit is associated with an SSB with a smallest index.

Case 2: When N is less than M, the quantity of bits in the one or more indication bits is N, there are Q indication bits in the N indication bits, each of the Q indication bits is associated with A reference signal resource sets or A SSBs, and each of remaining (N-Q) indication bits in the N indication bits is associated with B reference signal resource sets or B SSBs. Q is a remainder of dividing M by N, that is, Q=M%N. A is a round-up result of dividing M by N, that is, $A=\left\lceil\frac{M}{N}\right\rceil$. B is a round-down result of dividing M by N, that is, $B=\left\lfloor\frac{M}{N}\right\rfloor$. This enables the quantity of reference signal resource sets or SSBs corresponding to each indication bit to be as the same or similar as possible.

For example, the reference signal availability indication information may include a maximum of 6 bits, and the quantity of reference signal resource sets or SSBs associated with the first DCI is 40. The quantity of indication bits is six. Q=40%6=4, $A=\left\lceil\frac{40}{6}\right\rceil=7$, N-Q=2, and $B=\left\lfloor\frac{40}{6}\right\rfloor=6$. To be specific, each of 4 indication bits is associated with seven reference signal resource sets or seven SSBs, and each of the remaining 2 indication bits is associated with six reference signal resource sets or six SSBs.

It should be noted that the Q indication bits may be first Q indication bits in the N indication bits, or last Q indication bits in the N indication bits. This is not limited.

The reference signal resource set indexes or SSB indexes associated with each indication bit in the first DCI may be in ascending or descending order.

For example, the reference signal availability indication information may include a maximum of 6 bits, and the quantity of reference signal resource sets associated with the first DCI is 64. Based on the foregoing related description of Q, it may be determined that the quantity of indication bits is six. In the 6 indication bits, 4 indication bits are associated with 11 reference signal resource sets or SSBs, and 2 indication bits are associated with ten reference signal resource sets or SSBs.

If reference signal resource set indexes or SSB indexes associated with each indication bit in the first DCI are in ascending order, an indication bit at the front is associated with more reference signal resource sets or SSBs, and an indication bit at the back is associated with fewer reference signal resource sets or SSBs, reference signal resource set indexes or SSB indexes (resource set indexes/SSB indexes) associated with firstBit are from 0 to 10, reference signal resource set indexes or SSB indexes associated with secondBit are from 11 to 21, reference signal resource set indexes or SSB indexes associated with thirdBit are from 22 to 32, reference signal resource set indexes or SSB indexes associated with fourthBit are from 33 to 43, reference signal resource set indexes or SSB indexes associated with fifthBit are from 44 to 53, and reference signal resource set indexes or SSB indexes associated with sixthBit are from 54 to 63.

It should be noted that the indication bit corresponding to firstBit is the 1st indication bit in the first DCI; the indication bit corresponding to secondBit is the 2nd indication bit in the first DCI; ...; and the indication bit corresponding to sixthBit is the 6th indication bit in the first DCI.

If reference signal resource set indexes or SSB indexes associated with each indication bit in the first DCI are in ascending order, an indication bit at the front is associated with fewer reference signal resource sets or SSBs, and an indication bit at the back is associated with more reference signal resource sets or SSBs, reference signal resource set indexes or SSB indexes associated with firstBit are from 0 to 9, reference signal resource set indexes or SSB indexes associated with secondBit are from 10 to 19, reference signal resource set indexes or SSB indexes associated with thirdBit are from 20 to 30, reference signal resource set indexes or SSB indexes associated with fourthBit are from 31 to 41, reference signal resource set indexes or SSB indexes associated with fifthBit are from 42 to 52, and reference signal resource set indexes or SSB indexes associated with sixthBit are from 53 to 63.

If reference signal resource set indexes or SSB indexes associated with each indication bit in the first DCI are in descending order, an indication bit at the front is associated with more reference signal resource sets or SSBs, and an indication bit at the back is associated with fewer reference signal resource sets or SSBs, reference signal resource set indexes or SSB indexes associated with firstBit are from 53 to 63, reference signal resource set indexes or SSB indexes associated with secondBit are from 42 to 52, reference signal resource set indexes or SSB indexes associated with thirdBit are from 31 to 41, reference signal resource set indexes or SSB indexes associated with fourthBit are from 20 to 30, reference signal resource set indexes or SSB indexes associated with fifthBit are from 10 to 19, and reference signal resource set indexes or SSB indexes associated with sixthBit are from 0 to 9.

If reference signal resource set indexes or SSB indexes associated with each indication bit in the first DCI are in descending order, an indication bit at the front is associated with fewer reference signal resource sets or SSBs, and an indication bit at the back is associated with more reference signal resource sets or SSBs, reference signal resource set indexes or SSB indexes associated with firstBit are from 54 to 63, reference signal resource set indexes or SSB indexes associated with secondBit are from 44 to 53, reference signal resource set indexes or SSB indexes associated with thirdBit are from 33 to 43, reference signal resource set indexes or SSB indexes associated with fourthBit are from 22 to 32, reference signal resource set indexes or SSB indexes associated with fifthBit are from 11 to 21, and reference signal resource set indexes or SSB indexes associated with sixthBit are from 0 to 10.

It should be noted that, in some cases, not all SSBs are configured with associated reference signals. For example, a value of M is determined based on a quantity of SSBs associated with all reference signals that are configured in SIB-X. For example, the network device configures 32 reference signal resource sets, which are respectively associated with SSB#0 to SSB#15, and SSB#48 to SSB#63. It is assumed that N=6. If the SSB indexes in ascending order are used for correspondence, an indication bit at the front is associated with more SSBs, and an indication bit at the back is associated with fewer SSBs, SSB indexes associated with firstBit are from 0 to 5, SSB indexes associated with secondBit are from 6 to 11, SSB indexes associated with thirdBit are from 12 to 15, and 48, SSB indexes associated with fourthBit are from 49 to 53, SSB indexes associated with fifthBit are from 54 to 58, and SSB indexes associated with the bit 6 are from 59 to 63.

Alternatively, in the reference signal resource set indexes or SSB indexes associated with each indication bit in the first DCI, the index interval between the neighboring reference signal resource sets or the index interval between the neighboring SSBs is equal to the quantity of bits of the reference signal availability indication information.

For example, N is equal to six, and M is equal to 36 (it is assumed that the reference signal resource set indexes or SSB indexes are from 0 to 35). Each indication bit may be associated with six reference signal resource sets or six SSBs. In this case, if the reference signal resource set indexes or SSB indexes associated with each indication bit in the first DCI are in ascending order, the reference signal resource set indexes or SSB indexes associated with firstBit are equal to {0,6,12,18,24,30}, the reference signal resource set indexes or SSB indexes associated with secondBit are equal to {1,7,13,19,25,31}, the reference signal resource set indexes or SSB indexes associated with thirdBit are equal to {2,8,14,20,26,32}, the reference signal resource set indexes or SSB indexes associated with fourthBit are equal to {3,9,15,21,27,33}, the reference signal resource set indexes or SSB indexes associated with fifthBit are equal to {4,10,16,22,28,34}, and the reference signal resource set indexes or SSB indexes associated with sixthBit are equal to {5,11,17,23,29,35}.

Case 3: When N is less than M, a quantity of bits in the one or more indication bits may be N, and each of P indication bits in the N indication bits is associated with A reference signal resource sets or A SSBs. (P*A) is less than or equal to M, ((P+1)*A) is greater than M, and A is a round-up result of dividing M by N, that is

$$A = \left\lceil \frac{M}{N} \right\rceil .$$

For example, the reference signal availability indication information may include a maximum of 6 bits, and the quantity of reference signal resource sets or SSBs associated with the first DCI is 8. The quantity of indication bits is six. $A = \left\lceil \frac{8}{6} \right\rceil = 2$, and P=4. To be specific, each of 4 indication bits is associated with two reference signal resource sets or two SSBs, and the remaining 2 bits are reserved bits.

For another example, the reference signal availability indication information may include a maximum of 6 bits, and the quantity of reference signal resource sets or SSBs associated with the first DCI is ten. The quantity of indication bits is six. $A=\lceil\frac{10}{6}\rceil=2$ , and P=5. To be specific, each of 5 indication bits in the 6 bits is associated with two reference signal resource sets or two SSBs, and the remaining 1 bit is a reserved bit.

When (P*A) is less than M, a (P+1)th bit in the N indication bits is associated with (M-P*A) reference signal resource sets or (M-P*A) SSBs.

For example, the reference signal availability indication information may include a maximum of 6 bits, and the quantity of reference signal resource sets or SSBs associated with the first DCI is 11. The quantity of indication bits is six. $A=\lceil\frac{11}{6}\rceil=2$ , P=5, and M-P*A=1. To be specific, each of 5 indication bits in the 6 bits is associated with two reference signal resource sets or two SSBs, and the remaining 1 bit is associated with one reference signal resource set or one SSB.

It should be noted that when the (P+1)th bit is not present, the P indication bits are first P indication bits in the N indication bits, or the P indication bits are last P indication bits in the N indication bits. When the (P+1)th bit is present, the P indication bits are first P indication bits in P+1 indication bits, or the P indication bits are last P indication bits in the P+1 indication bits. This is not limited.

The reference signal resource set indexes or SSB indexes associated with each indication bit in the first DCI may be in ascending or descending order. For the description, reference may be made to the related description in the foregoing case 2. Details are not described again.

Alternatively, in the reference signal resource set indexes or SSB indexes associated with each indication bit in the first DCI, the index interval between the neighboring reference signal resource sets or the index interval between the neighboring SSBs is equal to the quantity of bits of the reference signal availability indication information. For the description, reference may be made to the related description in the foregoing case 2. Details are not described again.

In the fifth possible design, the value of the indication bit may be set to zero, to indicate that the reference signal corresponding to the reference signal resource set associated with the indication bit is not sent, and the value of the indication bit may be set to one, to indicate that the reference signal corresponding to the reference signal resource set associated with the indication bit is sent. Alternatively, the value of the indication bit may be set to one, to indicate that the reference signal corresponding to the reference signal resource set associated with the indication bit is not sent, and the value of the indication bit may be set to zero, to indicate that the reference signal corresponding to the reference signal resource set associated with the indication bit is sent. This is not limited.

Based on the method shown in FIG. 5, the network device may send, to the terminal device, the first DCI that includes the reference signal availability indication information. Because each indication bit in the reference signal availability indication information may be associated with the one or more reference signal resource sets, or associated with the one or more SSBs, the terminal device may determine, based on the value of each indication bit, whether the reference signal corresponding to the reference signal resource set associated with each indication bit is sent, or whether the reference signal corresponding to the SSB associated with each indication bit is sent. A mapping relationship between the indication bit, and the reference signal resource set or SSB is clearly defined in embodiments of this application. This provides a feasible solution for the network device to indicate the plurality of reference signal resource sets or the plurality of SSBs by using limited indication bits, to notify the terminal device whether corresponding reference signals are sent.

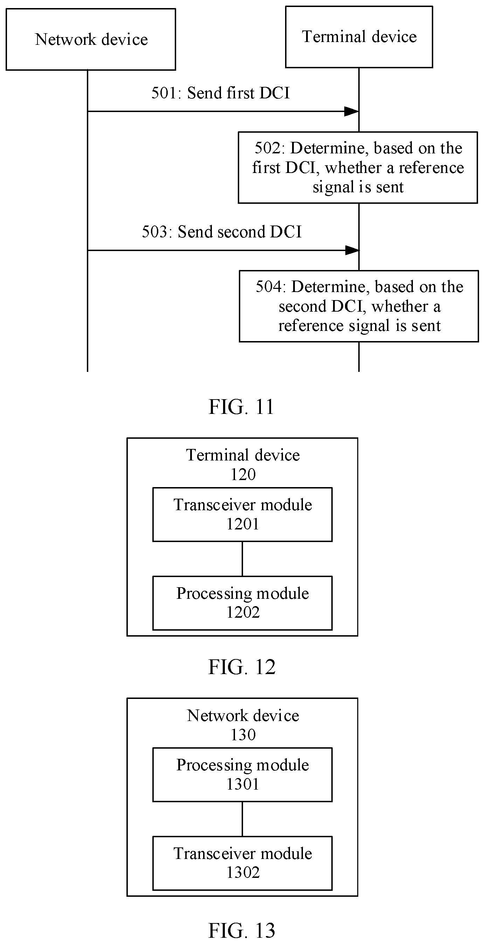

Based on the method shown in FIG. 5, as shown in FIG. 11, when the first DCI is first paging DCI, the communication method provided in embodiments of this application may further include the following step 503 and step 504.

Step 503: The network device sends second DCI to the terminal device.

The second DCI is the PEI. The second DCI may include a first indication bit, the first indication bit is associated with one or more SSBs, and the first indication bit indicates whether a reference signal corresponding to the SSB associated with the first indication bit is sent. The one or more SSBs associated with the first indication bit are exactly the same as the one or more SSBs associated with 1 indication bit included in the first DCI, and the one or more SSBs associated with the first indication bit include an SSB quasi-co-located with the second DCI.

A monitoring location of the PEI may include a plurality of monitoring occasions (monitoring occasion, MO), and different MOs may correspond to different SSB indexes, or may be described as: A sending direction of the PEI on one MO is the same as a sending direction or a sending parameter of the SSB associated with the PEI.

For example, the first DCI is the paging DCI. For example, in the paging DCI, the reference signal resource set indexes or SSB indexes associated with firstBit are from 0 to 10, the reference signal resource set indexes or SSB indexes associated with secondBit are from 11 to 21, the reference signal resource set indexes or SSB indexes associated with thirdBit are from 22 to 32, the reference signal resource set indexes or SSB indexes associated with fourthBit are from 33 to 43, the reference signal resource set indexes or SSB indexes associated with fifthBit are from 44 to 53, and the reference signal resource set indexes or SSB indexes associated with the bit 6 are from 54 to 63. In an MO corresponding to the SSB index=0, the reference signal resource set indexes or SSB indexes associated with the first indication bit included in the PEI are from 0 to 10 (in other words, the first indication bit is the same as firstBit in the paging DCI). In an MO corresponding to the SSB index=22, the reference signal resource set indexes or SSB indexes associated with the first indication bit included in the PEI are from 22 to 32 (in other words, the first indication bit is the same as thirdBit in the paging DCI).

The indication bit corresponding to firstBit is a $1^{st}$ indication bit in the paging DCI; the indication bit corresponding to secondBit is a $2^{nd}$ indication bit in the paging DCI; ...; and the indication bit corresponding to fourthBit is a $4^{th}$ indication bit in the paging DCI.

Therefore, step 503 may alternatively be understood as: The first indication bit included in the PEI is one of the indication bits included in the paging DCI, and may be specifically an indication bit associated with an SSB index associated with an MO of a current PEI.

Step 504: The terminal device determines, based on the second DCI, whether the reference signal is sent.

The terminal device may determine, based on the value of the first indication bit in the second DCI, whether the reference signal corresponding to the reference signal resource set or the SSB associated with the first indication bit is sent.

For example, the value of the first indication bit may be set to zero, to indicate that the reference signal corresponding to the reference signal resource set or SSB associated with the first indication bit is not sent, and the value of the first indication bit may be set to one, to indicate that the reference signal corresponding to the reference signal resource set or SSB associated with the first indication bit is sent. Alternatively, the value of the first indication bit may be set to one, to indicate that the reference signal corresponding to the reference signal resource set or SSB associated with the first indication bit is not sent, and the value of the first indication bit may be set to zero, to indicate that the reference signal corresponding to the reference signal resource set or SSB associated with the first indication bit is sent. This is not limited.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with the examples described in embodiments disclosed in this specification, algorithms and steps may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, each device may be divided into functional modules based on the foregoing method example. For example, the functional modules may be divided corresponding to the functions, or two or more functions may be integrated into one processing module. The integrated module may be implemented in a form of hardware, or may be implemented in a form of a software functional module. It should be noted that, in embodiments of this application, the module division is used as an example, and is merely logical function division. In actual implementation, another division manner may be used.

When each functional module is obtained through division based on each corresponding function, FIG. 12 shows a terminal device. The terminal device 120 may include a transceiver module 1201 and a processing module 1202. For example, the terminal device 120 may be a terminal device, or may be a chip used in the terminal device or another combined component or part having functions of the terminal device. When the terminal device 120 is the terminal device, the transceiver module 1201 may be a transceiver, where the transceiver may include an antenna, a radio frequency circuit, and the like; and the processing module 1202 may be a processor (or a processing circuit), for example, a baseband processor, where the baseband processor may include one or more CPUs. When the terminal device 120 is the component that has the function of the terminal device, the transceiver module 1201 may be a radio frequency unit, where the processing module 1202 may be a processor (or a processing circuit), for example, a baseband processor. When the terminal device 120 is a chip system, the transceiver module 1201 may be an input/output interface of a chip (for example, a baseband chip); and the processing module 1202 may be a processor (or a processing circuit) of the chip system or a logic circuit, and may include one or more central processing units. It should be understood that the transceiver module 1201 in embodiments of this application may be implemented by a transceiver or a transceiver-related circuit component, and the processing module 1202 may be implemented by a processor or a processor-related circuit component (or referred to as a processing circuit).

For example, the transceiver module 1201 may be configured to perform all sending and receiving operations performed by the terminal device in embodiments shown in FIG. 5 to FIG. 11, and/or configured to support another process of the technology described in this specification. The processing module 1202 may be configured to perform all operations performed by the terminal device in embodiments shown in FIG. 5 to FIG. 11 other than the sending and receiving operations, and/or configured to support another process of the technology described in this specification.

The transceiver module 1201 is configured to receive first downlink control information DCI from a network device.

The processing module 1202 is configured to determine, based on the first DCI, whether a reference signal is sent.

The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

In still another possible implementation, the transceiver module 1201 in FIG. 12 may be replaced with a transceiver, and functions of the transceiver module 1201 may be integrated into the transceiver. The processing module 1202 may be replaced with a processor, and functions of the processing module 1202 may be integrated into the processor. Further, the terminal device 120 shown in FIG. 12 may further include a memory. When the transceiver module 1201 is replaced with a transceiver and the processing module 1202 is replaced with a processor, the terminal device 120 in embodiments of this application may be the communication apparatus shown in FIG. 4.

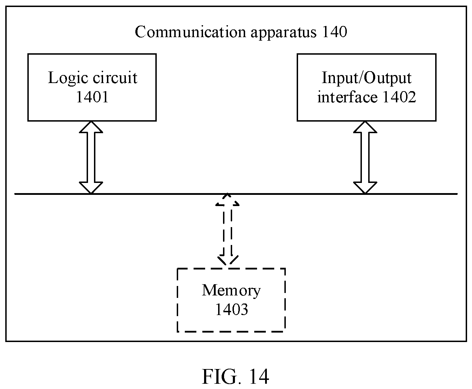

Alternatively, when the transceiver module 1201 is replaced with a transceiver, and the processing module 1202 is replaced with a processor, the terminal device 120 in embodiments of this application may alternatively be the communication apparatus 140 shown in FIG. 14. The processor may be a logic circuit 1401, and the transceiver may be an input/output interface 1402. Further, the communication apparatus 140 shown in FIG. 14 may further include a memory 1403.

When each functional module is obtained through division based on each corresponding function, FIG. 13 shows a network device. The network device 130 may include a processing module 1301 and a transceiver module 1302. For example, the network device 130 may be a network device, or may be a chip used in the network device or another combined device, component, or the like that has functions of the foregoing network device. When the network device 130 is the network device, the processing module 1301 may be a processor (or a processing circuit), for example, a baseband processor, where the baseband processor may include one or more CPUs; and the transceiver module 1302 may be a transceiver, where the transceiver may include an antenna, a radio frequency circuit, and the like. When the network device 130 is the component that has the function of the network device, the processing module 1301 may be a processor (or a processing circuit), for example, a baseband processor; and the transceiver module 1302 may be a radio frequency unit. When the network device 130 is a chip system, the processing module 1301 may be a processor (or a processing circuit) of the chip system, or a logic circuit, and may include one or more central processing modules; and the transceiver module 1302 may be an input/output interface of a chip (for example, a baseband chip). It should be understood that, in embodiments of this application, the processing module 1301 may be implemented by a processor or a processor-related circuit component (or referred to as a processing circuit), and the transceiver module 1302 may be implemented by a transceiver or a transceiver-related circuit component.

For example, the processing module 1301 may be configured to perform all operations performed by the network device in embodiments shown in FIG. 5 to FIG. 11 other than sending and receiving operations, and/or configured to support another process of the technology described in this specification. The transceiver module 1302 may be configured to perform all sending and receiving operations performed by the network device in embodiments shown in FIG. 5 to FIG. 11, and/or configured to support another process of the technology described in this specification.

The processing module 1301 is configured to determine first DCI.

The transceiver module 1302 is configured to send the first DCI to a terminal device.

The first DCI includes reference signal availability indication information, and the reference signal availability indication information includes one or more indication bits. Each indication bit is associated with one or more reference signal resource sets, or each indication bit is associated with one or more synchronization signal and physical broadcast channel blocks SSB. A value of the indication bit is used to determine whether a reference signal corresponding to the associated reference signal resource set is sent, or the value of the indication bit is used to determine whether a reference signal corresponding to the associated SSB is sent. The reference signal corresponding to the SSB is determined based on quasi co-location QCL configuration information included in configuration information of the reference signal resource set, and the QCL configuration information is used to configure an SSB associated with the reference signal resource set.

In still another possible implementation, the processing module 1301 in FIG. 13 may be replaced with a processor, and functions of the processing module 1301 may be integrated into the processor. The transceiver module 1302 may be replaced with a transceiver, and functions of the transceiver module 1302 may be integrated into the transceiver. Further, the network device 130 shown in FIG. 13 may further include a memory. When the processing module 1301 is replaced by a processor, and the transceiver module 1302 is replaced by a transceiver, the network device 130 in embodiments of this application may be the communication apparatus shown in FIG. 4.

Alternatively, when the processing module 1301 is replaced with a processor, and the transceiver module 1302 is replaced with a transceiver, the network device 130 in embodiments of this application may alternatively be the communication apparatus 140 shown in FIG. 14. The processor may be a logic circuit 1401, and the transceiver may be an input/output interface 1402. Further, the communication apparatus 140 shown in FIG. 14 may further include a memory 1403.

Embodiments of this application further provide a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may alternatively be an external storage device of the foregoing terminal, for example, a plug-in hard disk, a smart memory card (smart memory card, SMC), a secure digital (secure digital, SD) card, and a flash card (flash card) that are configured on the foregoing terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular order. In addition, the terms "including", "having", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one (piece) of a, b, or c may represent: a, b, c, "a and b", "a and c", "b and c", or "a, b, and c", where a, b, and c may be singular or plural.

Based on the foregoing description of the implementations, a person skilled in the art may clearly understand that for the purpose of convenient and brief description, division into the foregoing functional modules is merely used as an example for description. In actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatuses and methods may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

**Claims**

1. A communication method, comprising:

   receiving, by a terminal device, first downlink control information DCI from a network device, wherein the first DCI comprises reference signal availability indication information, and the reference signal availability indication information comprises one or more indication bits, wherein each indication bit is associated with one or more reference signal resource sets, or each indication bit is associated with one or more synchronization signal and physical broadcast channel blocks SSB;
   a value of the indication bit is used to determine whether a reference signal corresponding to the associated reference signal resource set is sent, or the value of the indication bit is used to determine whether a reference signal corresponding to the associated SSB is sent; and
   the reference signal corresponding to the SSB is determined based on quasi co-location QCL configuration information comprised in configuration information of the reference signal resource set, and the QCL configuration information is used to configure an SSB associated with the reference signal resource set; and
   determining, by the terminal device based on the first DCI, whether the reference signal is sent.

2. The method according to claim 1, wherein system information received by the terminal device comprises first configuration information, wherein the first configuration information is used to configure a location of the indication bit that is associated with the SSB and that is in the first DCI.

3. The method according to claim 2, wherein a quantity of bits comprised in the reference signal availability indication information is F, and F is determined based on the first configuration information corresponding to each SSB.

4. The method according to claim 1, wherein system information received by the terminal device comprises second configuration information, wherein the second configuration information is used to configure the one or more reference signal resource sets associated with the indication bit, or the second configuration information is used to configure the one or more SSBs associated with the indication bit.

5. The method according to claim 4, wherein a quantity of bits comprised in the reference signal availability indication information is G, and G is determined based on a quantity of pieces of second configuration information comprised in the system information.

6. The method according to claim 1, wherein system information received by the terminal device comprises third configuration information, wherein the third configuration information is used to configure a quantity of reference signal resource sets associated with each indication bit, or the third configuration information is used to configure a quantity of SSBs associated with each indication bit.

7. A communication method, comprising:

   determining, by a network device, first downlink control information DCI; and
   sending, by the network device, the first DCI to a terminal device, wherein the first DCI comprises reference signal availability indication information, and the reference signal availability indication information comprises one or more indication bits, wherein
   each indication bit is associated with one or more reference signal resource sets, or each indication bit is associated with one or more synchronization signal and physical broadcast channel blocks SSB;
   a value of the indication bit is used to determine whether a reference signal corresponding to the associated reference signal resource set is sent, or the value of the indication bit is used to determine whether a reference signal corresponding to the associated SSB is sent; and
   the reference signal corresponding to the SSB is determined based on quasi co-location QCL configuration information comprised in configuration information of the reference signal resource set, and the QCL configuration information is used to configure an SSB associated with the reference signal resource set.

8. The method according to claim 7, wherein

system information sent by the network device comprises first configuration information, wherein the first configuration information is used to configure a location of the indication bit that is associated with the SSB and that is in the first DCI.

9. The method according to claim 8, wherein
a quantity of bits comprised in the reference signal availability indication information is F, and F is determined based on the first configuration information corresponding to each SSB.

10. The method according to claim 7, wherein
system information sent by the network device comprises second configuration information, wherein the second configuration information is used to configure the one or more reference signal resource sets associated with the indication bit, or the second configuration information is used to configure the one or more SSBs associated with the indication bit.

11. The method according to claim 10, wherein
a quantity of bits comprised in the reference signal availability indication information is G, and G is determined based on a quantity of pieces of second configuration information comprised in the system information.

12. The method according to claim 7, wherein
system information sent by the network device comprises third configuration information, wherein the third configuration information is used to configure a quantity of reference signal resource sets associated with each indication bit, or the third configuration information is used to configure a quantity of SSBs associated with each indication bit.

13. The method according to claim 1 or 7, wherein
the configuration information of the reference signal resource set comprises fourth configuration information, wherein the fourth configuration information is used to configure a location of the indication bit that is associated with the reference signal resource set and that is in the first DCI.

14. The method according to claim 13, wherein
a quantity of bits comprised in the reference signal availability indication information is E, and E is determined based on the fourth configuration information comprised in each reference signal resource set.

15. The method according to any one of claim 1, 6, 7, or 12, wherein

the reference signal availability indication information comprises a maximum of N bits, and N is a positive integer;
a quantity of reference signal resource sets associated with the first DCI is M, or a quantity of SSBs associated with the first DCI is M, and M is a positive integer; and
when N is greater than or equal to M, a quantity of bits in the one or more indication bits is M; and each indication bit one-to-one corresponds to one reference signal resource set, or each indication bit one-to-one corresponds to one SSB.

16. The method according to claim 15, wherein

when N is less than M, a quantity of bits in the one or more indication bits is N, there are Q indication bits in the N indication bits, each of the Q indication bits is associated with A reference signal resource sets or A SSBs, and each of remaining (N-Q) indication bits in the N indication bits is associated with B reference signal resource sets or B SSBs, wherein
Q is a remainder of dividing M by N, A is a round-up result of dividing M by N, and B is a round-down result of dividing M by N.

17. The method according to claim 16, wherein
the Q indication bits are first Q indication bits in the N indication bits, or last Q indication bits in the N indication bits.

18. The method according to claim 15, wherein

when N is less than M, a quantity of bits in the one or more indication bits is N, and each of P indication bits in the N indication bits is associated with A reference signal resource sets or A SSBs, wherein
(P*A) is less than or equal to M, ((P+1)*A) is greater than M, and A is a round-up result of dividing M by N.

19. The method according to claim 18, wherein
when (P*A) is less than M, a (P+1)$^{th}$ bit in the N indication bits is associated with (M-P*A) reference signal resource sets or (M-P*A) SSBs.

20. The method according to claim 18, wherein
the P indication bits are first P indication bits in the N indication bits, or the P indication bits are last P indication bits in the N indication bits.

21. The method according to any one of claims 6, 12, and 15 to 20, wherein

reference signal resource set indexes or SSB indexes associated with each indication bit in the first DCI are in ascending or descending order; or
in the reference signal resource set indexes or SSB indexes associated with each indication bit in the first DCI, an index interval between neighboring reference signal resource sets or an index interval between neighboring SSBs is equal to a quantity of bits of the reference signal availability indication information.

22. The method according to any one of claims 1 to 21, wherein

the quantity of SSBs associated with the first DCI is equal to a quantity of predefined SSBs, and the quantity of predefined SSBs is determined based on a frequency band on which the SSB is located and a subcarrier spacing; the quantity of SSBs associated with the first DCI is equal to a quantity of SSBs actually sent by the network device, and the quantity of SSBs actually sent by the network device is determined based on ssb-PositionsInBurst comprised in SIB1 sent by the network device; or the quantity of SSBs associated with the first DCI is equal to a quantity of SSBs that is configured in the system information and that is associated with the reference signal, and the quantity of SSBs that is configured in the system information and that is associated with the reference signal is determined based on the QCL configuration information comprised in the configuration information of each reference signal resource set.

23. The method according to any one of claims 1 to 22, wherein
the quantity of reference signal resource sets associated with the first DCI is equal to a quantity of reference signal resource sets configured in the system information.

24. The method according to any one of claims 1 to 23, wherein
the first DCI is paging (paging) DCI or a paging early indication PEI.

25. The method according to any one of claims 1 to 6 and 13 to 24, wherein

when the first DCI is the paging (paging) DCI, the terminal device further receives second DCI from the network device, wherein the second DCI is the paging early indication PEI; the second DCI comprises a first indication bit, the first indication bit is associated with one or more SSBs, and the first indication bit indicates whether a reference signal corresponding to the SSB associated with the first indication bit is sent; and the one or more SSBs associated with the first indication bit are exactly the same as the one or more SSBs associated with 1 indication bit comprised in the first DCI, and the one or more SSBs associated with the first indication bit comprise an SSB quasi-co-located with the second DCI.

26. The method according to any one of claims 7 to 12 and 13 to 24, wherein

when the first DCI is the paging paging DCI, the network device further sends second DCI to the terminal device, wherein the second DCI is the paging early indication PEI; the second DCI comprises a first indication bit, the first indication bit is associated with one or more SSBs, and the first indication bit indicates whether a reference signal corresponding to the SSB associated with the first indication bit is sent; and the one or more SSBs associated with the first indication bit are exactly the same as the one or more SSBs associated with 1 indication bit comprised in the first DCI, and the one or more SSBs associated with the first indication bit comprise an SSB quasi-co-located with the second DCI.

27. A communication apparatus, comprising:

a transceiver module, configured to receive first downlink control information DCI from a network device, wherein the first DCI comprises reference signal availability indication information, and the reference signal availability indication information comprises one or more indication bits, wherein each indication bit is associated with one or more reference signal resource sets, or each indication bit is associated with one or more synchronization signal and physical broadcast channel blocks SSB; a value of the indication bit is used to determine whether a reference signal corresponding to the associated reference signal resource set is sent, or the value of the indication bit is used to determine whether a reference signal corresponding to the associated SSB is sent; and the reference signal corresponding to the SSB is determined based on quasi co-location QCL configuration information comprised in configuration information of the reference signal resource set, and the QCL configuration information is used to configure an SSB associated with the reference signal resource set; and a processing module, configured to determine, based on the first DCI, whether the reference signal is sent.

28. A communication apparatus, comprising:

a processing module, configured to determine first downlink control information DCI; and

a transceiver module, configured to send the first DCI to a terminal device, wherein the first DCI comprises reference signal availability indication information, and the reference signal availability indication information comprises one or more indication bits, wherein

each indication bit is associated with one or more reference signal resource sets, or each indication bit is associated with one or more synchronization signal and physical broadcast channel blocks SSB;

a value of the indication bit is used to determine whether a reference signal corresponding to the associated reference signal resource set is sent, or the value of the indication bit is used to determine whether a reference signal corresponding to the associated SSB is sent; and

the reference signal corresponding to the SSB is determined based on quasi co-location QCL configuration information comprised in configuration information of the reference signal resource set, and the QCL configuration information is used to configure an SSB associated with the reference signal resource set.

29. A communication apparatus, wherein the communication apparatus comprises a processor, and the processor is configured to run a computer program or instructions, to enable the communication apparatus to perform the communication method according to any one of claims 1 to 6 and 13 to 25, or the communication method according to any one of claims 7 to 12, 13 to 24, and 26.

30. A communication apparatus, wherein the communication apparatus comprises an input/output interface and a logic circuit, the input/output interface is configured to input and/or output information, and the logic circuit is configured to perform the communication method according to any one of claims 1 to 6 and 13 to 25, or the communication method according to any one of claims 7 to 12, 13 to 24, and 26, to perform processing based on the information and/or generate the information, wherein

the information comprises first downlink control information DCI, wherein the first DCI comprises reference signal availability indication information, and the reference signal availability indication information comprises one or more indication bits, wherein each indication bit is associated with one or more reference signal resource sets, or each indication bit is associated with one or more synchronization signal and physical broadcast channel blocks SSB; a value of the indication bit is used to determine whether a reference signal corresponding to the associated reference signal resource set is sent, or the value of the indication bit is used to determine whether a reference signal corresponding to the associated SSB is sent; and the reference signal corresponding to the SSB is determined based on quasi co-location QCL configuration information comprised in configuration information of the reference signal resource set, and the QCL configuration information is used to configure an SSB associated with the reference signal resource set.

31. A computer-readable storage medium, wherein the computer-readable storage medium stores computer instructions or a program, and when the computer instructions or the program is run on a computer, the computer is enabled to perform the communication method according to any one of claims 1 to 6 and 13 to 25, or the communication method according to any one of claims 7 to 12, 13 to 24, and 26.

32. A computer program product, wherein the computer program product comprises computer instructions, and when some or all of the computer instructions are run on a computer, the computer is enabled to perform the communication method according to any one of claims 1 to 6 and 13 to 25, or the communication method according to any one of claims 7 to 12, 13 to 24, and 26.

33. A chip, wherein the chip is coupled to a memory, and is configured to read and execute program instructions stored in the memory, to perform the communication method according to any one of claims 1 to 6 and 13 to 25, or the communication method according to any one of claims 7 to 12, 13 to 24, and 26.

FIG. 1

FIG. 2

EP 4 412 139 A1

FIG. 3

FIG. 4

```
┌──────────────────┐          ┌──────────────────┐
│  Network device  │          │  Terminal device │
└────────┬─────────┘          └─────────┬────────┘
         │                              │
         │    501: Send first DCI       │
         │─────────────────────────────▶│
         │                    ┌─────────┴──────────┐
         │                    │ 502: Determine,    │
         │                    │ based on the first │
         │                    │ DCI, whether a     │
         │                    │ reference signal   │
         │                    │ is sent            │
         │                    └─────────┬──────────┘
         │                              │
```

FIG. 5

SIB-X

| Configuration information of a reference signal resource set 0 | | Configuration information of a reference signal resource set 1 | | | Configuration information of a reference signal resource set M−1 | |
| --- | --- | --- | --- | --- | --- | --- |
| Parameter 0 of the reference signal resource set | Configuration information of a resource 0 | Parameter 0 of the reference signal resource set | Configuration information of a resource 0 | | Parameter 0 of the reference signal resource set | Configuration information of a resource 0 |
| Parameter 1 of the reference signal resource set | Configuration information of a resource 1 | Parameter 1 of the reference signal resource set | Configuration information of a resource 1 | ... | Parameter 1 of the reference signal resource set | Configuration information of a resource 1 |
| ... | ... | ... | ... | | ... | ... |
| Parameter K−1 of the reference signal resource set | Configuration information of a resource L−1 | Parameter K−1 of the reference signal resource set | Configuration information of a resource L−1 | | Parameter K−1 of the reference signal resource set | Configuration information of a resource L−1 |

FIG. 6

SIB-X

| First configuration information 0 | First configuration information 1 | ... | First configuration information M−1 |

| Configuration information of a reference signal resource set 0 | | Configuration information of a reference signal resource set 1 | | Configuration information of a reference signal resource set M−1 | |
| --- | --- | --- | --- | --- | --- |
| Parameter 0 of the reference signal resource set | Configuration information of a resource 0 | Parameter 0 of the reference signal resource set | Configuration information of a resource 0 | Parameter 0 of the reference signal resource set | Configuration information of a resource 0 |
| Parameter 1 of the reference signal resource set | Configuration information of a resource 1 | Parameter 1 of the reference signal resource set | Configuration information of a resource 1 | Parameter 1 of the reference signal resource set | Configuration information of a resource 1 |
| ... | ... | ... | ... | ... | ... |
| Parameter K−1 of the reference signal resource set | Configuration information of a resource L−1 | Parameter K−1 of the reference signal resource set | Configuration information of a resource L−1 | Parameter K−1 of the reference signal resource set | Configuration information of a resource L−1 |

FIG. 7

EP 4 412 139 A1

SIB-X

| Second configuration information 0 | Second configuration information 1 | ... | Second configuration information G−1 |

| Configuration information of a reference signal resource set 0 | |
| --- | --- |
| Parameter 0 of the reference signal resource set | Configuration information of a resource 0 |
| Parameter 1 of the reference signal resource set | Configuration information of a resource 1 |
| ... | ... |
| Parameter K−1 of the reference signal resource set | Configuration information of a resource L−1 |

| Configuration information of a reference signal resource set 1 | |
| --- | --- |
| Parameter 0 of the reference signal resource set | Configuration information of a resource 0 |
| Parameter 1 of the reference signal resource set | Configuration information of a resource 1 |
| ... | ... |
| Parameter K−1 of the reference signal resource set | Configuration information of a resource L−1 |

| Configuration information of a reference signal resource set M−1 | |
| --- | --- |
| Parameter 0 of the reference signal resource set | Configuration information of a resource 0 |
| Parameter 1 of the reference signal resource set | Configuration information of a resource 1 |
| ... | ... |
| Parameter K−1 of the reference signal resource set | Configuration information of a resource L−1 |

FIG. 8

SIB-X

| Configuration information of a reference signal resource set 0 | | Configuration information of a reference signal resource set 1 | | | Configuration information of a reference signal resource set M−1 | |
|---|---|---|---|---|---|---|
| Parameter 0 of the reference signal resource set | Configuration information of a resource 0 | Parameter 0 of the reference signal resource set | Configuration information of a resource 0 | | Parameter 0 of the reference signal resource set | Configuration information of a resource 0 |
| Parameter 1 of the reference signal resource set | Configuration information of a resource 1 | Parameter 1 of the reference signal resource set | Configuration information of a resource 1 | ... | Parameter 1 of the reference signal resource set | Configuration information of a resource 1 |
| ... | ... | ... | ... | | ... | ... |
| Parameter K−1 of the reference signal resource set | Configuration information of a resource L−1 | Parameter K−1 of the reference signal resource set | Configuration information of a resource L−1 | | Parameter K−1 of the reference signal resource set | Configuration information of a resource L−1 |
| Fourth configuration information 0 | | Fourth configuration information 1 | | | Fourth configuration information M−1 | |

FIG. 9

SIB-X

Third configuration information

| Configuration information of a reference signal resource set 0 | | Configuration information of a reference signal resource set 1 | | Configuration information of a reference signal resource set M−1 | |
|---|---|---|---|---|---|
| Parameter 0 of the reference signal resource set | Configuration information of a resource 0 | Parameter 0 of the reference signal resource set | Configuration information of a resource 0 | Parameter 0 of the reference signal resource set | Configuration information of a resource 0 |
| Parameter 1 of the reference signal resource set | Configuration information of a resource 1 | Parameter 1 of the reference signal resource set | Configuration information of a resource 1 | Parameter 1 of the reference signal resource set | Configuration information of a resource 1 |
| ... | ... | ... | ... | ... | ... |
| Parameter K−1 of the reference signal resource set | Configuration information of a resource L−1 | Parameter K−1 of the reference signal resource set | Configuration information of a resource L−1 | Parameter K−1 of the reference signal resource set | Configuration information of a resource L−1 |

FIG. 10

EP 4 412 139 A1

```
┌─────────────────────┐                      ┌─────────────────────┐
│   Network device    │                      │   Terminal device   │
└─────────────────────┘                      └─────────────────────┘
          │                                             │
          │          501: Send first DCI                │
          ├───────────────────────────────────────────►│
          │                                             │
          │              ┌──────────────────────────────┴──┐
          │              │ 502: Determine, based on the     │
          │              │ first DCI, whether a reference   │
          │              │ signal is sent                   │
          │              └──────────────────────────────┬──┘
          │          503: Send second DCI                │
          ├───────────────────────────────────────────►│
          │                                             │
          │              ┌──────────────────────────────┴──┐
          │              │ 504: Determine, based on the     │
          │              │ second DCI, whether a            │
          │              │ reference signal is sent         │
          │              └──────────────────────────────┬──┘
          │                                             │
```

FIG. 11

```
┌─────────────────────────────────┐
│        Terminal device          │
│             120                 │
│   ┌─────────────────────────┐   │
│   │   Transceiver module    │   │
│   │         1201            │   │
│   └───────────┬─────────────┘   │
│               │                 │
│   ┌───────────┴─────────────┐   │
│   │   Processing module     │   │
│   │         1202            │   │
│   └─────────────────────────┘   │
└─────────────────────────────────┘
```

FIG. 12

```
┌─────────────────────────────────┐
│        Network device           │
│             130                 │
│   ┌─────────────────────────┐   │
│   │   Processing module     │   │
│   │         1301            │   │
│   └───────────┬─────────────┘   │
│               │                 │
│   ┌───────────┴─────────────┐   │
│   │   Transceiver module    │   │
│   │         1302            │   │
│   └─────────────────────────┘   │
└─────────────────────────────────┘
```

FIG. 13

FIG. 14

## INTERNATIONAL SEARCH REPORT

| International application No. |
|---|
| **PCT/CN2022/114010** |

**A. CLASSIFICATION OF SUBJECT MATTER**

H04L 5/00(2006.01)i; H04W 68/00(2009.01)i; H04W 52/02(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 指示, 配置, 通知, 可用性, 被发送, 存在, 寻呼DCI, 寻呼提前指示, 提前寻呼指示, 比特, 一个, 单, 位置, 索引, 关联, 对应, SSB, 同步资源块, 同步信号块, 广播信道块, PBCH块, SSS块, PSS块, 参考信号, 资源集, 资源组, 多, 至少一个, paging DCI, PEI, EPI, indicat+, bit, RS, TRS, reference signal, present, presence , absent, absence , sent, transmit, transfer, transmission, availability, index, position, location, associat+, correspond, resource set

**C. DOCUMENTS CONSIDERED TO BE RELEVANT**

| Category* | Citation of document, with indication, where appropriate, of the relevant passages | Relevant to claim No. |
|---|---|---|
| X | WO 2021184200 A1 (HUAWEI TECHNOLOGIES CO., LTD.) 23 September 2021 (2021-09-23) <br> description, page 12, line 30-page 25, line 14, page 40, line 31 -page 41, line 25 | 1-33 |
| A | MODERATOR SAMSUNG. "Summary for TRS/CSI-RS occasion(s) for idle/inactive UEs" *3GPP TSG RAN WG1 #104b-e R1-2104115,* 20 April 2021 (2021-04-20), <br> entire document | 1-33 |
| A | CN 113163474 A (HUAWEI TECHNOLOGIES CO., LTD.) 23 July 2021 (2021-07-23) <br> entire document | 1-33 |
| A | HUAWEI et al. "Assistance RS occasions for IDLE/inactive mode" *3GPP TSG RAN WG1 Meeting #104-e R1-2100217,* 05 February 2021 (2021-02-05), <br> entire document | 1-33 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 November 2022** | **23 November 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/114010**

| Patent document cited in search report | | | Publication date (day/month/year) | Patent family member(s) | | | Publication date (day/month/year) |
|---|---|---|---|---|---|---|---|
| WO | 2021184200 | A1 | 23 September 2021 | None | | | |
| CN | 113163474 | A | 23 July 2021 | WO | 2021147836 | A1 | 29 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111259695
- CN 202111308894
- CN 202210400437